# EUROPÄISCHE PATENTSCHRIFT

(11) **EP 4 098 514 B1**
(45) Veröffentlichungstag und Bekanntmachung des Hinweises auf die Patenterteilung: **29.01.2025**
(21) Anmeldenummer: 22184386.5
(22) Anmeldetag: 22.02.2016
(51) Int. Cl.: B62B 7/14, B62B 9/10

(54) **KINDERWAGEN MIT EINEM ZUSAMMENKLAPPBAREN KINDERSITZ**
BABY CARRIAGE WITH A COLLAPSIBLE CHILD SEAT
VOITURE D'ENFANT DOTÉE D'UN SIÈGE ENFANT PLIABLE

(30) Priorität: 23.02.2015 DE 102015102538
(43) Veröffentlichungstag der Anmeldung: 07.12.2022
(62) Teilanmeldung aus: 16705939.3
(73) Patentinhaber: CYBEX GmbH, 95448 Bayreuth (DE)
(72) Erfinder: POS, Martin, 95444 Bayreuth (DE)
(74) Vertreter: Meissner Bolte Partnerschaft mbB

(56) Entgegenhaltungen:
- EP-A1- 0 479 132
- EP-A2- 2 275 321
- WO-A1-2010/050804
- WO-A2-2014/207689

## Beschreibung

Die Erfindung betrifft einen Kinderwagen, insbesondere Kindersportwagen, Buggy oder dergleichen Fahrzeug für Kinder, umfassend ein Kinderwagengestell und einen zusammenklappbaren Kindersitz.

EP 2 275 321 A1 beschreibt einen Kinderwagen mit einem Rahmen und einem faltbaren und entfernbaren Sitz.

WO 2010/050804 A1 bezieht sich auf einen Kindersitz vorne an einem Buggy.

Eine Vielzahl von Kindersitzen, die mit einem Kinderwagengestell verbindbar sind, ist bekannt. Die Kindersitze sind entweder dauerhaft mit dem Kinderwagengestell verbunden oder werden, wenn benötigt, mit dem Kinderwagengestell verbunden.

Kindersitze werden jedoch nicht ständig verwendet und müssen in der Zeit der Nichtbenutzung zwischengelagert werden. Im Nichtbenutzungszustand soll ein Kindersitz wenig Raum benötigen, so dass dieser allein oder zusammen mit dem Kinderwagengestell raumsparend verstaut werden kann. Hierzu kann ein Kindersitz oft zusammengeklappt werden.

Nachteilig an bisher bekannten zusammenklappbaren Kindersitzen ist, dass das Zusammenklappen sehr kompliziert ist und technisch aufwendig ist. Insbesondere wird zum Zusammenklappen des Kindersitzes die Durchführung einer Vielzahl von Handgriffen benötigt, um den Kindersitz aus dem ausgeklappten Zustand (Benutzungszustand) in den zusammengeklappten Zustand (Nichtbenutzungszustand) zu überführen. Die Vielzahl von Handgriffen zum Zusammenklappen ist oft schwierig zu merken, nicht intuitiv und mechanisch kompliziert auszuführen. Auch besteht bei bisher bekannten zusammenklappbaren Kindersitzen eine erhebliche Verletzungsgefahr, insbesondere durch Einklemmen von Fingern und/oder Händen beim Zusammenklappen des Kindersitzes. Auch sind bisher bekannte zusammenklappbare Kindersitze technisch aufwendig aufgebaut.

Aufgabe der vorliegenden Erfindung ist es daher, einen zusammenklappbaren Kindersitz aufzuzeigen, der technisch einfach zusammenklappbar ist und mit technisch einfachen Bewegungen aus dem ausgeklappten Zustand in den zusammengeklappten Zustand überführbar ist.

Diese Aufgabe wird durch einen Kinderwagen gemäß Anspruch 1 gelöst. Bevorzugte Ausführungsformen sind in den abhängigen Ansprüchen definiert.

Der Kinderwagen umfasst einen zusammenklappbaren Kindersitz, umfassend eine Rückenlehne, ein Sitzflächenelement, ein Adapterelement oder mehrere Adapterelemente, über das oder die der Kindersitz mit einem Kinderwagengestell verbindbar ist, und ein erstes Arretierungselement, über das das Sitzflächenelement in Bezug auf das Adapterelement oder die Adapterelemente arretierbar ist, wobei das erste Arretierungselement derart ausgebildet ist, dass durch Verringern des Winkels zwischen der Rückenlehne und dem Sitzflächenelement die Arretierung des Sitzflächenelements in Bezug auf das Adapterelement oder die Adapterelemente lösbar ist.

Ein Vorteil hiervon ist, dass die Arretierung des Sitzflächenelements technisch einfach lösbar ist. Zur Lösung der Arretierung des Sitzflächenelements ist nur ein Handgriff bzw. eine mechanisch einfach durchzuführende Bewegung nötig, die mit nur einer Hand des Benutzers durchgeführt werden kann. Durch die einfache Lösbarkeit der Arretierung des Sitzflächenelements, lässt sich der Kindersitz einfach und schnell zusammenklappen. Dadurch, dass lediglich eine Hand zum Lösen der Arretierung des Sitzflächenelements und somit zum Zusammenklappen des Kindersitzes benötigt wird, ist die Verletzungsgefahr, insbesondere dass der Benutzer Finger und/oder eine Hand einklemmt und somit verletzt, erniedrigt. Hierdurch wird die Sicherheit der Bedienung des Kindersitzes erhöht. Darüber hinaus ist der Kindersitz technisch einfach aufgebaut und technisch einfach herstellbar. Zudem ist die Bewegung zum Zusammenklappen des Kindersitzes intuitiv, so dass auch ein Benutzer, der nicht mit dem Kindersitz vertraut ist, den Kindersitz schnell zusammenklappen kann. Darüber hinaus ist vorteilhaft, dass durch die Bewegung der Rückenlehne zum Runterklappen/Einklappen der Rückenlehne auch das Sitzflächenelement zum Runterklappen/Einklappen freigegeben wird. Durch das Fortsetzen des Verringerns des Winkels zwischen Rückenlehne und Sitzflächenelement berührt schließlich die Rückenlehne das Sitzflächenelement und bewegt das Sitzflächenelement (zusammen mit der Rückenlehne) auf das Adapterelement oder die Adapterelemente zu, wodurch der Kindersitz raumsparend zusammengeklappt wird. Somit kann durch eine einzige Bewegung die Rückenlehne und auch das Sitzflächenelement (in Richtung des Adapterelements oder der Adapterelement) heruntergeklappt und der Kindersitzt somit zusammengeklappt werden.

Der Kindersitz umfasst ferner ein Rückhalteelement zum Zurückhalten eines Kinds im Kindersitz und ein zweites Arretierungselement zum Arretieren des Rückhalteelements in Bezug auf das Sitzflächenelement,
wobei das zweite Arretierungselement derart ausgebildet ist, dass durch Verringern des Winkels zwischen der Rückenlehne und dem Sitzflächenelement die Arretierung des Rückhalteelements in Bezug auf das Sitzflächenelement lösbar ist. Durch das Rückhalteelement wird das Kind sicher im Kindersitz zurückgehalten. Darüber hinaus ist vorteilhaft, dass die Arretierung des Rückhalteelements technisch einfach lösbar. Ein weiterer Vorteil ist, dass sowohl die Arretierung des Sitzflächenelements als auch die Arretierung des Rückhalteelements durch eine (mechanisch einfach durchzuführende) Bewegung der Rückenlehne lösbar ist. Somit ist lediglich eine einzige Bewegung, nämlich die Verringerung des Winkels zwischen der Rückenlehne und dem Sitzflächenelement, nötig, um sowohl die die Arretierung des Sitzflächenelements als auch die Arretierung des Rückhalteelements zu lösen. Somit ist der Kindersitz technisch einfach und schnell zusammenklappbar. Darüber hinaus ist die Verletzungsgefahr beim Zusammenklappen des Kindersitzes verringert, da lediglich eine mechanisch einfach auszuführende Bewegung (Bewegung der Rückenlehne in Richtung des Sitzflächenelements) notwendig ist, um beide Arretierungen zu lösen. Die Gefahr des Einklemmens von Fingern oder einer Hand des Benutzers ist dadurch deutlich reduziert. Darüber hinaus ist vorteilhaft, dass durch die Bewegung der Rückenlehne zum Runterklappen/Einklappen der Rückenlehne neben dem Sitzflächenelement auch das Rückhalteelement zum Runterklappen/Einklappen freigegeben wird. Durch das Fortsetzen des Verringerns des Winkels zwischen Rückenlehne und Sitzflächenelement berührt schließlich die Rückenlehne zunächst das Rückhalteelement und bewegt das Rückhalteelement auf das Sitzflächenelement zu und berührt anschließend das Sitzflächenelement und bewegt das Sitzflächenelement (zusammen mit der Rückenlehne und dem Rückhalteelement) auf das Adapterelement oder die Adapterelemente zu, wodurch der Kindersitz raumsparend zusammengeklappt wird.

In einer Ausführungsform sind die Rückenlehne und das Sitzflächenelement um eine erste (gemeinsame) Drehachse drehbar. Ein Vorteil hiervon ist, dass der Kindersitz technisch ausgebildet und herstellbar ist. Zudem kann das erste Arretierungselement technisch einfach ausgebildet sein. Auch lässt sich hierdurch der Winkel zwischen Rückenlehne und Sitzflächenelement technisch einfach verändern, insbesondere vergrößern oder verringern. Darüber hinaus werden durch die Drehbarkeit der Rückenlehne und des Sitzflächenelements um die gleiche Drehachse die auftretenden Kräfte, die auf den Kindersitz wirken, deutlich verringert. Hierdurch muss der Kindersitz weniger formstabil ausgebildet sein. Somit sind kostengünstigere Materialen verwendbar, wodurch der Kindersitz kostengünstig herstellbar ist.

Das Rückhalteelement kann um eine zweite Drehachse drehbar sein. Ein Vorteil hiervon ist, dass der Winkel zwischen Rückhalteelement und Sitzflächenelement und/oder dem oder den Adapterelementen technisch einfach veränderbar ist.

In einer weiteren Ausführungsform sind die Rückenlehne und das Sitzflächenelement um eine erste Drehachse und das Rückhalteelement um eine zweite Drehachse drehbar, und die erste Drehachse ist nichtidentisch mit der zweiten Drehachse. Durch die Trennung bzw. Separierung der ersten Drehachse von der zweiten Drehachse werden die auftretenden Kräfte über den Kindersitz verteilt. Somit treten an keiner Stelle des Kindersitzes, insbesondere an keiner der beiden Drehachsen, übermäßige Kräfte auf, wodurch der Kindersitz weniger stabil und somit leichter ausgebildet werden kann. Auch ist der Kindersitz hierdurch kostengünstiger herstellbar.

Die Rückenlehne kann eine Freigabevorrichtung, insbesondere einen Freigabegriff, umfassen, wobei die Freigabevorrichtung vorzugsweise an einem dem ersten Arretierungselement abgewandten Ende der Rückenlehne angeordnet ist, und das erste Arretierungselement zum Arretieren der Rückenlehne in Bezug auf das Adapterelement oder die Adapterelemente in einer oder mehreren Positionen ausgebildet ist, wobei der Kindersitz derart ausgebildet ist, dass durch Betätigung der Freigabevorrichtung, insbesondere durch Wegziehen der Freigabevorrichtung vom ersten Arretierungselement, die Arretierung zwischen der Rückenlehne und dem Adapterelement oder den Adapterelementen lösbar ist, so dass der Winkel zwischen der Rückenlehne und dem Adapterelement oder den Adapterelementen veränderbar, insbesondere verringerbar, ist. Ein Vorteil hiervor ist, dass die Arretierung der Rückenlehne (in Bezug auf das Sitzflächenelement und ggf. das Rückhalteelement) technisch einfach lösbar ist. Insbesondere wird lediglich eine mechanisch einfach auszuführende Bewegung bzw. Handgriff (mit einer Hand) benötigt, um die Arretierung der Rückenlehne zu lösen. Nach dem Lösen der Arretierung der Rückenlehne (in Bezug auf das Sitzflächenelement und das Adapterelement oder die Adapterelemente) lässt sich diese (um die erste Drehachse) bewegen und durch Verringern des Winkels zwischen Rückenlehne und Sitzflächenelement wird sowohl die Arretierung des Sitzflächenelements als auch die Arretierung des Rückhalteelements gelöst. Somit kann durch einen einzigen Handgriff und eine durchgehende bzw. ununterbrochene Bewegung (Verringern des Winkels zwischen der Rückenlehne und dem Sitzflächenelement) der Kindersitz zusammengeklappt werden, d. h. Rückenlehne, Sitzflächenelement und Rückhalteelement nähern sich aneinander soweit wie möglich an bzw. bilden einen möglichst kleinen Winkel jeweils zueinander. Hierdurch wird besonders wenig Stauraum zum Verstauen des (zusammengeklappten) Kindersitzes benötigt, wenn dieser nicht verwendet wird. Darüber hinaus sinkt die Verletzungsgefahr bei dem Zusammenklappen des Kindersitzes weiter, da durch Betätigen der Freigabevorrichtung und der anschließenden Bewegung der Rückenlehne zum Verringern des Winkels zwischen der Rückenlehne und dem Sitzflächenelement alle Arretierungen (Arretierung der Rückenlehne, Arretierung des Sitzflächenelements und Arretierung des Rückhalteelements) gelöst werden. Hierdurch sinkt die Gefahr, dass der Benutzer Finger oder eine Hand einklemmt und sich somit verletzt.

Das erste Arretierungselement kann ein erstes Zahnrad zum Arretieren des Sitzflächenelements in Bezug auf das Adapterelement oder die Adapterelemente umfassen, wobei das erste Zahnrad in der Freigabestellung des Sitzflächenelements um die erste Drehachse drehbar ist. Ein Vorteil hiervor ist, dass der Kindersitz technisch besonders einfach ausgebildet und herstellbar ist. Darüber hinaus ist ein Zahnrad sehr langlebig und erhöht somit die Langlebigkeit bzw. Lebensdauer des Kindersitzes. Zudem ist ein Zahnrad leicht ersetzbar, so dass der Kindersitz technisch einfach und kostengünstig repariert werden kann. Die Freigabestellung des Sitzflächenelements ist die Stellung, in der die erste Arretierung (Arretierung zwischen Sitzflächenelement und Adapterelement bzw. Adapterelementen) gelöst ist.

In einer weiteren Ausführungsform ist das das erste Zahnrad entlang der ersten Drehachse derart verschiebbar angeordnet, dass das erste Zahnrad außer Eingriff mit dem Adapterelement und/oder dem Sitzflächenelement bringbar ist und somit die Arretierung des Sitzflächenelements in Bezug auf das Adapterelement oder die Adapterelemente lösbar ist. Hierdurch ist die erste Arretierung/Verriegelung (Arretierung/Verriegelung zwischen dem Sitzflächenelement und dem Adapterelement oder den Adapterelementen) technisch einfach ausgebildet und technisch einfach lösbar.

Das zweite Arretierungselement kann ein zweites Zahnrad zum Arretieren des Rückhalteelements in Bezug auf das Sitzflächenelement umfassen, wobei das das zweite Zahnrad in der Freigabestellung des Rückhalteelements um die zweite Drehachse drehbar ist. Ein Vorteil hiervor ist, dass der Kindersitz technisch besonders einfach ausgebildet und herstellbar ist. Darüber hinaus ist ein Zahnrad sehr langlebig und erhöht somit die Langlebigkeit bzw. Lebensdauer des Kindersitzes. Zudem ist ein Zahnrad leicht ersetzbar, so dass der Kindersitz leicht und kostengünstig repariert werden kann. Die Freigabestellung des Rückhalteelements ist die Stellung, in der die zweite Arretierung (Arretierung zwischen Rückhalteelement und Sitzflächenelement) gelöst ist.

Das zweite Zahnrad kann entlang der zweiten Drehachse derart verschiebbar angeordnet sein, dass das zweite Zahnrad außer Eingriff mit dem Rückhalteelement und/oder dem Sitzflächenelement bringbar ist und somit die Arretierung des Rückhalteelements in Bezug auf das Sitzflächenelement lösbar ist. Hierdurch ist die zweite Verriegelung (Verriegelung zwischen dem Rückhalteelement und dem Adapterelement oder den Adapterelementen) technisch einfach ausgebildet und technisch einfach lösbar.

In einer weiteren Ausführungsform umfasst das erste Arretierungselement ein drittes Zahnrad zur Arretierung der Rückenlehne in Bezug auf das Adapterelement oder die Adapterelemente umfasst. Ein Vorteil hiervor ist, dass der Kindersitz technisch besonders einfach ausgebildet und herstellbar ist. Darüber hinaus ist ein Zahnrad sehr langlebig und erhöht somit die Langlebigkeit bzw. Lebensdauer des Kindersitzes. Zudem ist ein Zahnrad leicht ersetzbar, so dass der Kindersitz leicht und kostengünstig repariert werden kann.

In einer weiteren Ausführungsform ist der Kindersitz derart ausgebildet, dass durch Betätigung der Freigabevorrichtung das dritte Zahnrad zur Lösung einer Arretierung zwischen der Rückenlehne und dem Adapterelement oder den Adapterelementen außer Eingriff bringbar ist. Ein Vorteil hiervon ist, dass das erste Arretierungselement technisch einfach ausgebildet ist.

Das erste Arretierungselement kann mit dem zweiten Arretierungselement über einen Seilzug, insbesondere einen Bowdenzug, verbunden sein. Hierdurch kann erreicht werden, dass die erste Arretierung bei einem geringeren (oder größeren) Winkel zwischen der Rückenlehne und dem Sitzflächenelement gelöst wird als die zweite Arretierung zwischen dem Rückhalteelement und dem Sitzflächenelement. Zudem ist vorteilhaft, dass das (nacheinander erfolgende) Entriegeln/Entsperren der ersten Arretierung und der zweiten Arretierung besonders sicher und zuverlässig ist. Zudem ist ein Seilzug technisch kostengünstig und somit der Kindersitz kostengünstig herstellbar. Auch ist ein Seilzug einfach reparierbar, so dass der Kindersitz einfach repariert werden kann. Hierdurch sinken die Herstellungskosten und die Reparaturkosten. Darüber hinaus weist ein Seilzug ein geringes Gewicht auf, so dass der Kindersitz ein geringes Gewicht aufweist und somit leicht tragbar ist.

Denkbar ist ein Kinderwagen, insbesondere Kindersportwagen, Buggy oder dergleichen Fahrzeug für Kinder, umfassend ein Kinderwagengestell und einen Kindersitz mit einer oder mehreren der oben ausgeführten Merkmalskombinationen. Ein Vorteil hiervon ist, dass die Arretierung des Sitzflächenelements einfach lösbar ist. Zur Lösung der Arretierung des Sitzflächenelements ist nur ein Handgriff bzw. eine mechanisch einfach durchzuführende Bewegung nötig, die mit nur einer Hand des Benutzers durchgeführt werden kann. Durch die leichte Lösbarkeit der Arretierung des Sitzflächenelements, lassen sich der Kindersitz und somit auch der Kinderwagen mitsamt dem Kindersitz einfach und schnell zusammenklappen. Dadurch, dass lediglich eine Hand zum Lösen der Arretierung des Sitzflächenelements und somit zum Zusammenklappen des Kindersitzes bzw. des Kinderwagens benötigt wird, wird die Verletzungsgefahr, insbesondere dass der Benutzer Finger und/oder eine Hand einklemmt und somit verletzt, erniedrigt. Hierdurch wird die Sicherheit der Bedienung des Kinderwagens erhöht. Darüber hinaus ist der Kinderwagen technisch einfach aufgebaut und technisch einfach herstellbar. Zudem ist die Bewegung zum Zusammenklappen des Kindersitzes bzw. Kinderwagens intuitiv, so dass auch ein Benutzer, der nicht mit dem Kindersitz/Kinderwagen vertraut ist, den Kindersitz/Kinderwagen schnell zusammenklappen kann. Darüber hinaus ist vorteilhaft, dass durch die Bewegung der Rückenlehne zum Runterklappen/Einklappen der Rückenlehne auch das Sitzflächenelement zum Runterklappen/Einklappen freigegeben wird. Durch das Fortsetzen des Verringerns des Winkels zwischen Rückenlehne und Sitzflächenelement berührt schließlich die Rückenlehne das Sitzflächenelement und bewegt das Sitzflächenelement (zusammen mit der Rückenlehne) auf das Adapterelement oder die Adapterelemente zu, wodurch der Kindersitz und somit auch der Kinderwagen mitsamt dem Kindersitz raumsparend zusammengeklappt wird.

Bevorzugte Ausführungsformen ergeben sich aus den Unteransprüchen. Nachfolgend wird die Erfindung anhand von Zeichnungen und Ausführungsbeispielen näher erläutert. Hierbei zeigen:
- Fig. 1: eine perspektivische Ansicht einer Ausführungsform des erfindungsgemäßen Kindersitzes;
- Fig. 2: eine Aufsicht auf einen Ausschnitt des Kindersitzes aus Fig. 1;
- Fig. 3: eine perspektivische Ansicht des in Fig. 2 gezeigten Ausschnitts;
- Fig. 4: eine weitere Aufsicht auf den in der Fig. 2 gezeigten Ausschnitt, wobei die erste Abdeckung entfernt wurde;
- Fig. 5: eine perspektivische Ansicht des in Fig. 4 gezeigten Ausschnitts;
- Fig. 6: eine weitere Aufsicht auf den in den Fig. 2 und 4 gezeigten Ausschnitt, wobei das Rückenlehneverbindungselement und die Rückhalteelementstrebe entfernt wurden;
- Fig. 7: eine perspektivische Ansicht des in Fig. 6 gezeigten Ausschnitts;
- Fig. 8: eine weitere Aufsicht auf den in den Fig. 2, 4 und 6 gezeigten Ausschnitt, wobei das Zugelement und die dritte Druckfeder entfernt wurden;
- Fig. 9: eine perspektivische Ansicht des in Fig. 8 gezeigten Ausschnitts;
- Fig. 10: eine weitere Aufsicht auf den in den Fig. 2, 4, 6 und 8 gezeigten Ausschnitt, wobei der Vorsprung und das zweite Zahnrad entfernt wurden;
- Fig. 11: eine perspektivische Ansicht des in Fig. 10 gezeigten Ausschnitts;
- Fig. 12: eine weitere Aufsicht auf den in den Fig. 2, 4, 6, 8 und 10 gezeigten Ausschnitt, wobei die äußere Adapterelementhälfte und das dritte Zahnrad entfernt wurden;
- Fig. 13: eine perspektivische Ansicht des in Fig. 12 gezeigten Ausschnitts;
- Fig. 14: eine weitere Aufsicht auf den in den Fig. 2, 4, 6, 8, 10 und 12 gezeigten Ausschnitt, wobei der Schubring entfernt wurde;
- Fig. 15: eine perspektivische Ansicht des in Fig. 14 gezeigten Ausschnitts;
- Fig. 16: eine weitere Aufsicht auf den in den Fig. 2, 4, 6, 8, 10, 12 und 14 gezeigten Ausschnitt, wobei das erste Zahnrad entfernt wurde;
- Fig. 17: eine perspektivische Ansicht des in Fig. 16 gezeigten Ausschnitts;
- Fig. 18: eine Aufsicht auf ein Rückenlehneverbindungselement aus den Fig. 1-17;
- Fig. 19: eine perspektivische Ansicht auf das Rückenlehneverbindungselement aus Fig. 18; und

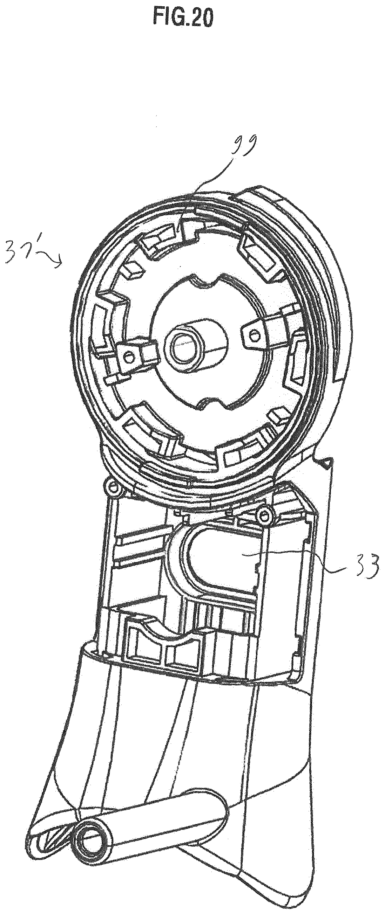

- Fig. 20: eine perspektivische Ansicht der äußeren Adapterelementhälfte des Kindersitzes aus den Fig. 1-17.

Bei der nachfolgenden Beschreibung werden für gleiche und gleichwirkende Teile dieselben Bezugsziffern verwendet.

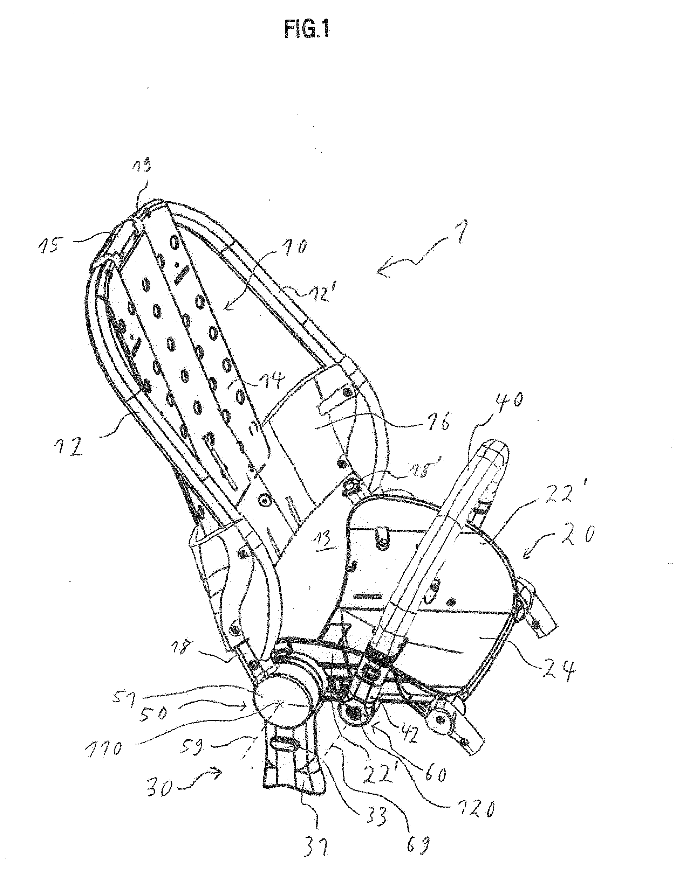

Fig. 1 zeigt eine perspektivische Ansicht einer Ausführungsform des erfindungsgemäßen Kindersitzes 1. Der Kindersitz 1 umfasst eine Rücklehne 10, ein Sitzflächenelement 20 und zwei Adapterelemente 30, 30', wobei in Fig. 1 nur ein Adapterelement 30 zu sehen ist (das andere Adapterelement 30' ist von dem Sitzflächenelement 20 verdeckt). Der Kindersitz 1 ist spiegelsymmetrisch bezüglich einer Ebene ausgebildet, die durch die Mitte des Bodenbereichs 24 des Sitzflächenelements 20 verläuft.

Die Rückenlehne 10 dient zum Unterstützen des Rückens des Kindes, wenn dieses in dem Kindersitz 1 sitzt bzw. liegt. Das Kind kann sich, wenn es im Kindersitz 1 sitzt bzw. liegt, mit seinem Rücken an die Rückenlehne 10 anlehnen. Das Sitzflächenelement 20 dient zum Unterstützen des Gesäßes des Kindes, wenn das Kind im Kindersitz 1 sitzt bzw. liegt.

Der Kindersitz 1 umfasst zudem ein Rückhalteelement 40. Das Rückhalteelement 40 dient dazu, das Kind sicher in dem Kindersitz 1 zurückzuhalten. Dies bedeutet, dass das Rückhalteelement 40 das Kind daran hindert, den Kindersitz 1 ohne weiteres nach vorne (d. h. in Fig. 1 nach rechts bzw. rechts oben) zu verlassen.

Die Rückenlehne 10 umfasst zwei Außenstreben 12, 12', die das obere Ende 19 der Rückenlehne 10 (d.h. das distale Ende der Rückenlehne 10 in Bezug auf das Adapterelement 30) mit dem ersten Arretierungselement 50 (über jeweils ein Rückenlehneverbindungselement 18, 18') verbinden. Die Außenstreben 12, 12' weisen im oberen Bereich, der sich unmittelbar an das obere Ende 19 der Rückenlehne 10 anschließt, einen Abstand/Freiraum zu einem Längsabschnitt 14 der Rückenlehne 10, der in der Mitte der Rückenlehne 10 verläuft, auf. Wenn das Kind im Kindersitz 1 sitzt, berührt der Rücken den Längsabschnitt 14, d. h. das Kind kann sich mit seinem Rücken an den Längsabschnitt 14 der Rückenlehne 10 anlehnen.

An den Längsabschnitt 14 schließt sich ein Lendenunterstützungsbereich 16 an, der sich über die komplette Breite der Rückenlehne 10 erstreckt. Der Lendenunterstützungsbereich 16 befindet sich im Bereich der Lende des Kindes, wenn das Kind (wie vorgesehen) im Kindersitz 1 sitzt. Die Außenstreben 12, 12' gehen in den Lendenunterstützungsbereich 16 über bzw. durchlaufen diesen. Zwischen dem Lendenunterstützungsbereich 16 und dem Sitzflächenelement 20 befindet sich ein Abstand bzw. ein Freiraum 13. In diesem Freiraum 13 befindet sich in der Mitte der Rückenlehne 10, d. h. - im Gebrauch - unterhalb des Längsabschnitts 14 kein Unterstützungselement für den Rücken bzw. die Lende des Kindes. Der Lendenunterstützungsbereich 16 ist über zwei Rückenlehneverbindungselemente 18, 18' mit dem ersten Arretierungselement 50 verbunden. Die Rückenlehneverbindungselemente 18, 18' schließen sich unterhalb des Lendenunterstützungsbereich 16 an und verbinden diesen mit dem ersten Arretierungselement 10 bzw. das untere Ende des Rückenlehneverbindungselements 18 bildet einen Teil des ersten Arretierungselements 10.

Die Rückenlehne 10 ist spiegelsymmetrisch ausgebildet zu einer Spiegelebene, die senkrecht auf dem Längsabschnitt 14 steht und vom oberen Ende 19 der Rückenlehne 10 aus durch die Mitte des Bodenbereichs 24 des Sitzflächenelements 20 verläuft.

Am oberen Ende 19 der Rückenlehne 10 befindet sich eine Freigabevorrichtung zur Lösung der dritten Arretierung. Die Freigabevorrichtung ist insbesondere ein Freigabegriff 15, der (in Fig. 1) nach oben gezogen werden kann.

Das Sitzflächenelement 20 ist schalenförmig ausgebildet. Das Sitzflächenelement 20 umfasst einen im Wesentlichen ebenen Bodenbereich 24 in seiner Mitte. Die beiden seitlichen Enden 22, 22' des Sitzflächenelements 20, die an den Bodenbereich 24 seitlich anschließen, stehen über die Grundfläche/den ebenen Bodenbereich 24 nach oben hinaus. Wenn das Kind (ordnungsgemäß) im Kindersitz 1 sitzt bzw. liegt, stehen die beiden seitlichen Enden 22, 22' derart über den Bodenbereich 24 des Sitzflächenelements 20 hinaus, dass das Gesäß des Kindes seitlich in der Bewegung eingeschränkt wird.

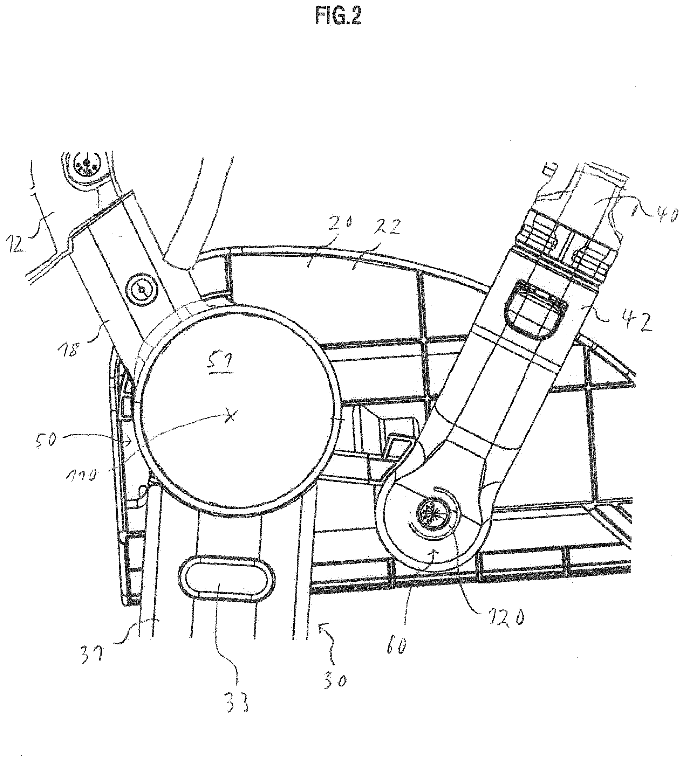

Das Sitzflächenelement 20 ist mit dem ersten Arretierungselement 50 verbunden. Das erste Arretierungselement 50 ist nahe dem hinteren Ende (in Fig. 2 links) des Sitzflächenelements 20 und knapp oberhalb der (in Fig. 2 im Wesentlichen horizontal verlaufenden) Mittellinie des Sitzflächenelements 20 angeordnet.

Die beiden Außenstreben 12, 12' als auch die beiden Rückenlehneverbindungselemente 18, 18' stehen seitlich derart über die seitlichen Enden 22, 22' des Sitzflächenelements 20 hinaus, dass im zusammengeklappten Zustand des Kindersitzes 1 das Sitzflächenelement 20 zumindest teilweise zwischen den Außenstreben 12, 12' aufgenommen werden kann.

Der Kindersitz 1 umfasst des Weiteren zwei Adapterelemente 30, 30' (wobei in Fig. 1 nur ein Adapterelement 30 zu sehen ist). Die Adapterelemente 30, 30' dienen zum Verbinden des Kindersitzes 1 mit einem Kinderwagengestell. Somit ist der Kindersitz über das Adapterelement 30 oder die Adapterelemente 30, 30' mit einem Kinderwagengestell verbindbar. Der Kindersitz 1 kann lediglich ein Adapterelement 30 aufweisen. Auch mehr als zwei Adapterelemente, z. B. drei, vier, fünf usw. sind vorstellbar. Durch eine höhere Anzahl von Adapterelement wird der Kindersitz noch sicherer und fester mit dem Kinderwagengestellt verbunden. Ebenfalls vorstellbar ist, dass der Kindersitz 1 unlösbar bzw. nur schwer lösbar über das Adapterelement 30 bzw. die Adapterelement 30, 30' mit dem Kinderwagengestell verbunden ist.

Das Adapterelement 30 besteht aus zwei Adapterelementhälften 31, 31'. Die beiden Adapterelementhälften 31, 31' bilden einen Hohlraum, in dem ein Vorsprung des Kinderwagengestells aufnehmbar ist (Nut-Feder-Verbindung bzw. Spundung). Andere Arten der Verbindung sind ebenfalls vorstellbar.

Das Adapterelement 30, 30' umfasst jeweils einen Entriegelungsknopf 33, mit dem die Verbindung zwischen dem Adapterelement 30, 30' und dem Kinderwagengestell lösbar ist. Der Entriegelungsknopf 33 kann eingedrückt werden. Hiermit wird die Entriegelung zwischen Adapterelement 30, 30' und dem Kinderwagengestell durchgeführt.

Die Verbindung zwischen dem Kindersitz 1 und dem Kinderwagengestell ist starr. Dies bedeutet, dass der Kindersitz weder nach oben, nach unten, noch nach vorne oder hinten bzw. nach links oder rechts bewegt werden kann, solange die Verbindung zwischen Adapterelement 30, 30' und dem Kinderwagengestell verriegelt bzw. eingerastet bzw. arretiert ist. Nach dem Betätigen des Entriegelungsknopfes 33, kann der Kindersitz nach oben (d.h. nach oben in Fig. 2) vom Kinderwagengestell entfernt, d. h. hochgehoben werden.

Die Rückenlehne 10 ist um eine erste Drehachse 59, die mittig durch das erste Arretierungselement 50 verläuft, drehbar. Die erste Drehachse 59 verläuft durch den Mittelpunkt 110 des ersten Arretierungselements 50 und verläuft in Fig. 2 senkrecht zur Papierebene.

Um die erste Drehachse 59 ist ebenfalls das Sitzflächenelement 20 drehbar.

Das Rückhalteelement 40 ist um eine zweite Drehachse 69 drehbar, die durch den Mittelpunkt 120 des zweiten Arretierungselements 60 verläuft. Die zweite Drehachse 69 verläuft in Fig. 2 ebenfalls senkrecht zur Papierebene.

Die erste Drehachse 59 und die zweite Drehachse 69 sind nicht identisch. Die erste Drehachse 59 und die zweite Drehachse 69 verlaufen parallel zueinander. Vorstellbar ist jedoch auch, dass die erste Drehachse 59 und die zweite Drehachse 69 identisch sind. Somit ist vorstellbar, dass das Rückhalteelement 40 um dieselbe Achse drehbar ist wie die Rückenlehne 10 und das Adapterelement 30. Ebenfalls vorstellbar ist, dass die erste Drehachse 59 und die zweite Drehachse 69 nicht identisch sind und nicht parallel zueinander verlaufen. Insbesondere können die erste Drehachse 59 und die zweite Drehachse 69 windschief zueinander sein.

In Fig. 1 ist der Kindersitz 1 im ausgeklappten Zustand gezeigt. Hierbei ist das Sitzflächenelement 20 in Bezug auf das bzw. die Adapterelemente 30, 30' arretiert. Dies bedeutet, dass das Sitzflächenelement 20 nicht um die erste Drehachse 59 drehbar ist. Somit steht das Sitzflächenelement 20 fest in Bezug auf das bzw. die Adapterelemente 30, 30'. In der Arretierungsstellung ist somit der Winkel zwischen dem Sitzflächenelement 20 und den Adapterelementen 30, 30' nicht veränderbar, insbesondere nicht verringerbar. Dies bedeutet, dass das Sitzflächenelement 20 nicht im Uhrzeigersinn (und auch nicht entgegen dem Uhrzeigersinn) auf die Adapterelemente 30, 30' zu um die erste Drehachse 59 bewegbar ist.

Im arretierten Zustand, der in Fig. 1 gezeigt ist, ist die Rückenlehne 10 in Bezug auf das Sitzflächenelement 20 ebenfalls arretiert, d. h. festgestellt. Auch ist die Rückenlehne 10 in Bezug auf das Adapterelement bzw. die Adapterelemente 30, 30' arretiert, d. h. festgestellt. Die Rückenlehne 10 ist in der Arretierungsstellung ebenfalls nicht um die erste Drehachse 59 drehbar, und der Winkel zwischen der Rückenlehne 10 und dem Sitzflächenelement 20 ist in der Verrieglungsstellung bzw. Arretierungsstellung der Rückenlehne 10, d.h. wenn die dritte Arretierung festgestellt ist, unveränderbar. In Fig. 1 ist somit der Winkel zwischen der Rückenlehne 10 und dem Sitzflächenelement 20 sowie auch der Winkel zwischen der Rückenlehne 10 und dem Adapterelement 30 nicht veränderbar.

Unter dem Winkel zwischen der Rückenlehne 10 und dem Sitzflächenelement 20 ist der Winkel zwischen einer Ebene, die entlang dem Längsabschnitt 14 der Rückenlehne 10 vom oben Ende 19 der Rückenlehne 10 aus läuft, und einer Ebene, die durch den ebenen Bodenbereich 24 des Sitzflächenelements 20 gebildet wird, zu verstehen.

Der Winkel zwischen dem Adapterelement 30, 30' und der Rückenlehne 10 ist der Winkel zwischen einer Ebene, die das erste Arretierungselement 50 in seinem Mittelpunkt 110 schneidet und sich (in Fig. 2) nach im Wesentlichen unten entlang des Adapterelements 30 erstreckt, und der Ebene, die durch den Längsabschnitt 14 der Rückenlehne 10 gebildet wird bzw. entlang der Rückenlehne 10 verläuft, definiert.

Der Kindersitz 1 umfasst des Weiteren ein Rückhalteelement 40. Das Rückhalteelement 40 ist im Freigabezustand (d.h. im nicht arretierten Zustand) um eine zweite Drehachse 69 drehbar. In Fig. 1 ist das Rückhalteelement 40 im Arretierungszustand gezeigt, d.h. die zweite Arretierung ist festgestellt. Im Arretierungszustand 40 kann sich das Rückhalteelement 40 nicht um die zweite Drehachse 69 drehen. Die zweite Drehachse 69 ist im Verhältnis zur ersten Drehachse 59 parallel verschoben. Die zweite Drehachse 69 befindet sich ungefähr in der Mitte der Länge (in Fig. 2 von links nach rechts verlaufend) des Sitzflächenelements 20. Die zweite Drehachse 69 befindet sich in der Ebene bzw. auf Höhe des Bodenbereichs 24 des Sitzflächenelements 20. Somit befindet sich die zweite Drehachse 69 (im in Fig. 1 gezeigten ausgeklappten Zustand des Kindersitzes) weiter entfernt von der Rückenlehne 10 als die erste Drehachse 59.

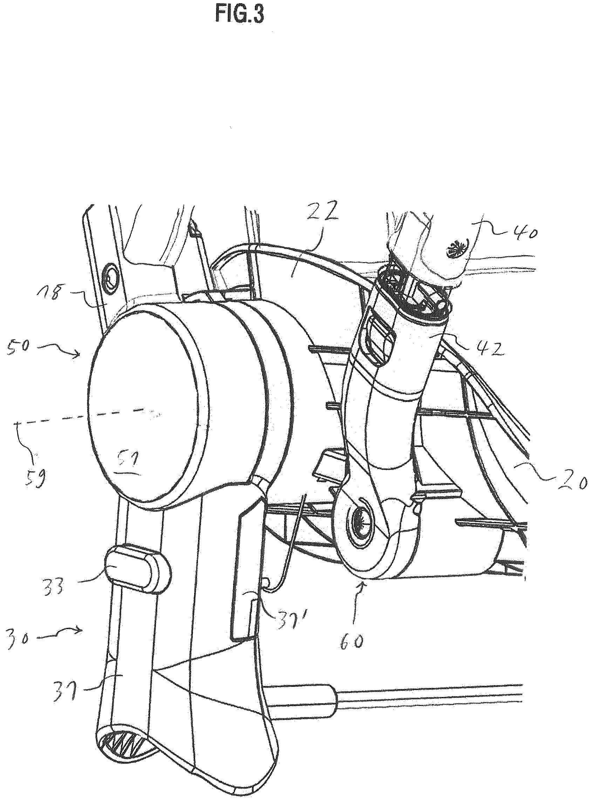

Fig. 2 zeigt eine (seitliche) Aufsicht auf einen Ausschnitt des Kindersitzes 1 aus Fig. 1, nämlich insbesondere das erste Arretierungselement 50 und das zweite Arretierungselement 60. Fig. 3 zeigt eine perspektivische Ansicht des im Wesentlichen gleichen Ausschnitts der Fig. 2.

Das erste Arretierungselement 50 weist eine erste Abdeckung 51 auf. Die erste Abdeckung 51 ist ein Plastik- bzw. Kunststoffelement, das die Mechanik des ersten Arretierungselements 50 vor dem Eindringen von Staub, Feuchtigkeit etc. schützt und das erste Arretierungselement 50 nach außen hin optisch abschließt. Auch eine Metalllegierung oder Metall als Material bzw. als Teil des Materials der ersten Abdeckung 51 sind vorstellbar.

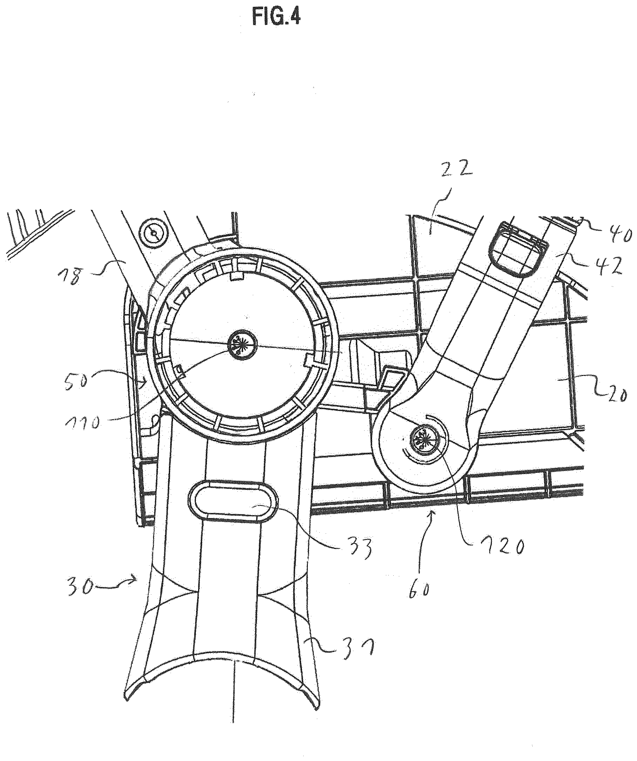

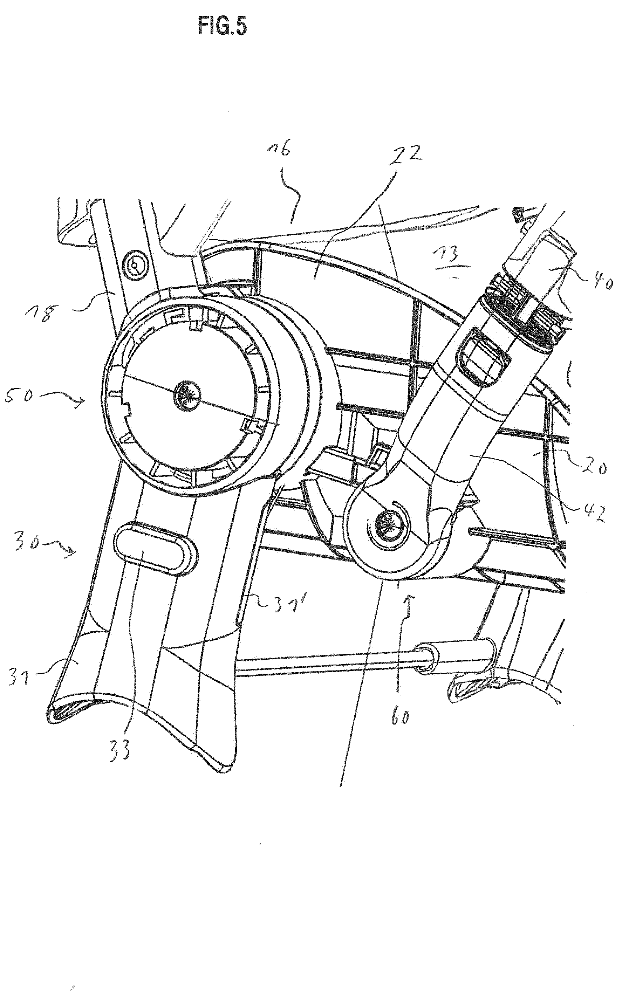

Fig. 4 zeigt eine weitere Aufsicht auf den in der Fig. 2 gezeigten Ausschnitt, wobei die erste Abdeckung 51 entfernt wurde. Fig. 5 zeigt den im Wesentlichen gleichen Ausschnitt wie Fig. 4 in perspektivischer Ansicht.

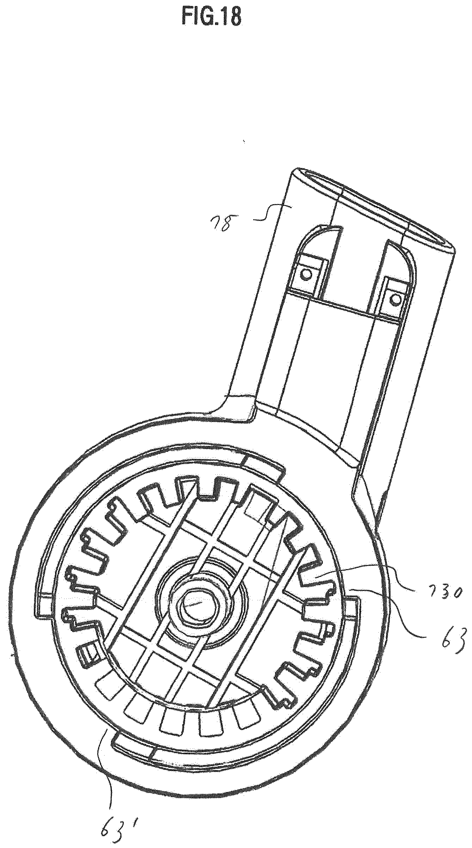

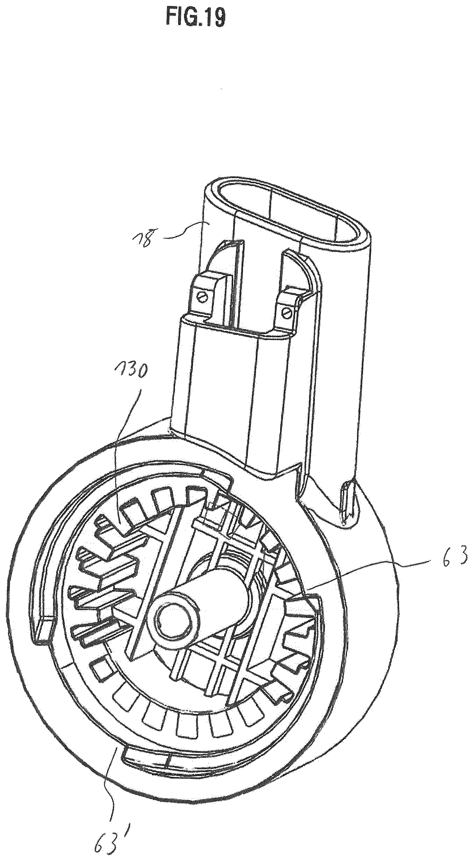

Fig. 4 und Fig. 5 zeigen folglich eine Aufsicht bzw. perspektivische Ansicht auf die Vorderseite des Rückenlehneverbindungselements 18. Fig. 18 und Fig. 19 zeigen eine Aufsicht und eine perspektivische Ansicht der der Vorderseite entgegengesetzten Rückseite des Rückenlehneverbindungselements 18.

Das Rückhalteelement 40 weist zwei Rückhalteelementstreben 42, 42' auf, über die das Rückhalteelement jeweils mit der zweiten Arretierungsvorrichtung 60 verbunden ist.

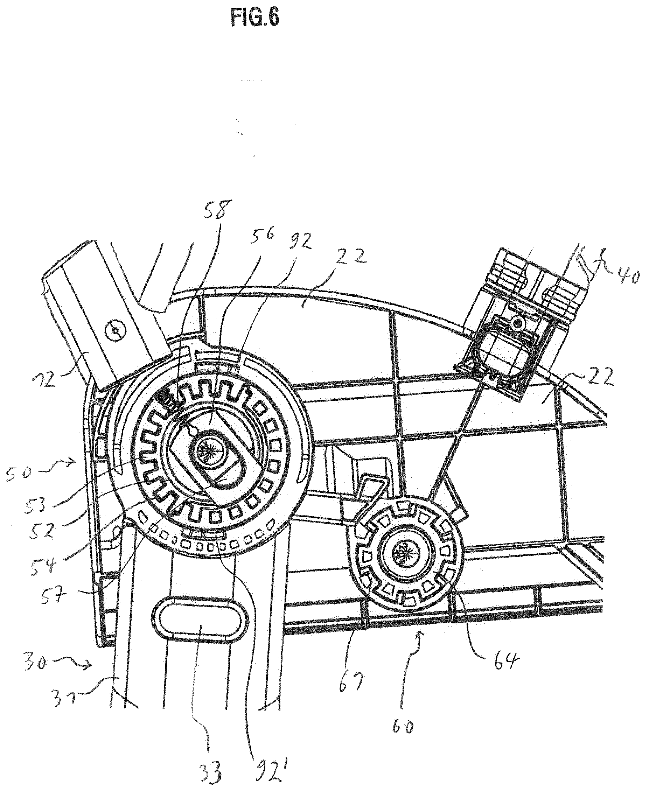

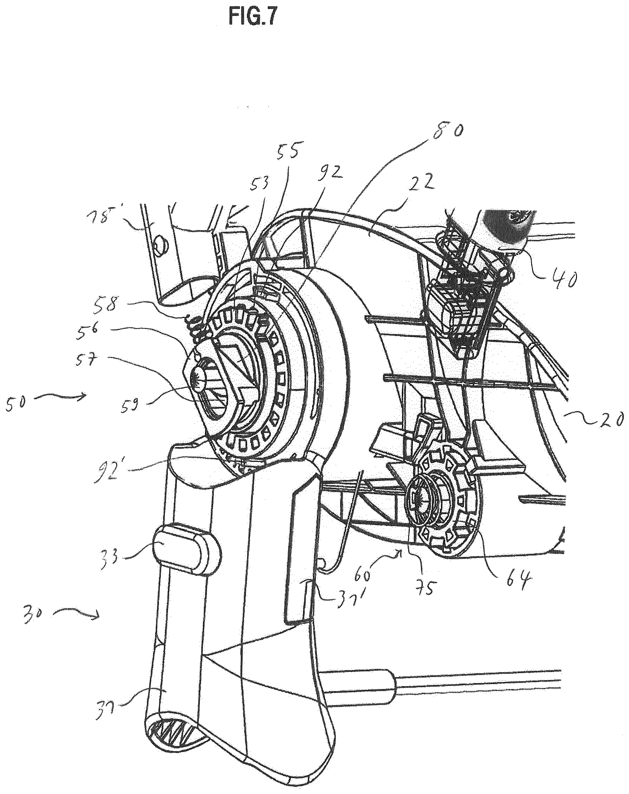

Fig. 6 zeigt eine weitere Aufsicht auf den in den Fig. 2 und 4 gezeigten Ausschnitt, wobei das Rückenlehneverbindungselement 18 und die Rückhalteelementstrebe 42 entfernt wurden. Fig. 7 zeigt eine perspektivische Ansicht des Ausschnitts aus Fig. 6.

Das erste Arretierungselement 50 weist ein drittes Zahnrad 52 auf. Das dritte Zahnrad 52 weist 11 (zueinander äquidistante) Zahnradzähne 53 auf. Die Zahnradzähne 53 erstrecken sich insgesamt über einen Winkel von ca. 180 Grad. Die beiden äußersten, gegenüberliegenden Zahnradzähne 53 weisen eine Stufenform auf. Die Stufenform der beiden äußersten Zahnradzähne 53 ist spiegelsymmetrisch in Bezug auf die erste Drehachse 59 ausgebildet. Die anderen (neun) Zahnradzähne 53 weisen eine rechteckige Form auf.

Das Adapterelement 30 weist eine dritte Innenverzahnung 54 auf. Die dritte Innenverzahnung 54 weist eine Anzahl von Nuten 55 auf. Die Zahnradzähne 53 des dritten Zahnrads 52 greifen in der Verriegelungsstellung der Rückenlehne 10 in die Nuten 55 der dritten Innenverzahnung 54.

In der Verriegelungsstellung der Rückenlehne (dritte Arretierung) greift zudem das dritte Zahnrad 52 in die vierte Innenverzahnung 130 des Rückenlehneverbindungselements 18 der Rückenlehne 10 (siehe Fig. 18 und Fig. 19). Die vierte Innenverzahnung 130 weist 14 Nuten auf. Diese Nuten erstrecken sich über einen Winkel von ca. 270 Grad. Die vier jeweils äußersten Nuten der vierten Innenverzahnung 130 weisen eine Stufenform auf, die komplementär ist zu den beiden äußersten Zahnradzähnen 53 des dritten Zahnrads 52. Die sechs Nuten zwischen den jeweils äußersten Nuten der vierten Innenverzahnung 130 weisen eine rechteckige Form auf. Somit kann das dritte Zahnrad 52 in genau vier Stellungen mit der zweiten Innenverzahnung 61 des zweiten Arretierungselements 60 in Eingriff gelangen. In diesen vier Stellungen bzw. Positionen wird somit die Rückenlehne 10 (bzw. das Rückenlehneverbindungselement 18 der Rückenlehne 10) in Bezug auf das Adapterelement 30 arretiert.

Das erste Arretierungselement 50 weist ein Zugelement 56 auf. Das Zugelement 56 weist eine Aussparung 57 auf, durch die die erste Drehachse 59 verläuft. Die Aussparung 57 ist ovalförmig. Das Zugelement 56 weist in der Seitenansicht, d.h. in einer Sicht rechtwinklig zu der Aufsicht der Fig. 6, eine dreieckige Form auf (dies ist in Fig. 7 gut erkennbar). Das Zugelement 56 ist über eine dritte Druckfeder 58 mit einem Seilzug/Bowdenzug (nicht dargestellt) verbunden. Über diesen Seilzug ist das Zugelement 56 mit der Freigabevorrichtung bzw. dem Freigabegriff 15 am oberen Ende 19 der Rückenlehne 10 verbunden. Die dritte Druckfeder 58 hält das Zugelement 56 in der in Fig. 6 bzw. Fig. 7 gezeigten Stellung. Durch Betätigen des Freigabegriffes 15 wird das Zugelement 56 derart bewegt, dass die dritte Druckfeder 58 zusammengedrückt wird und das Zugelement 56 (in Fig. 6 von rechts unten nach links oben) gegenüber dem dritten Zahnrad 52 bewegt wird.

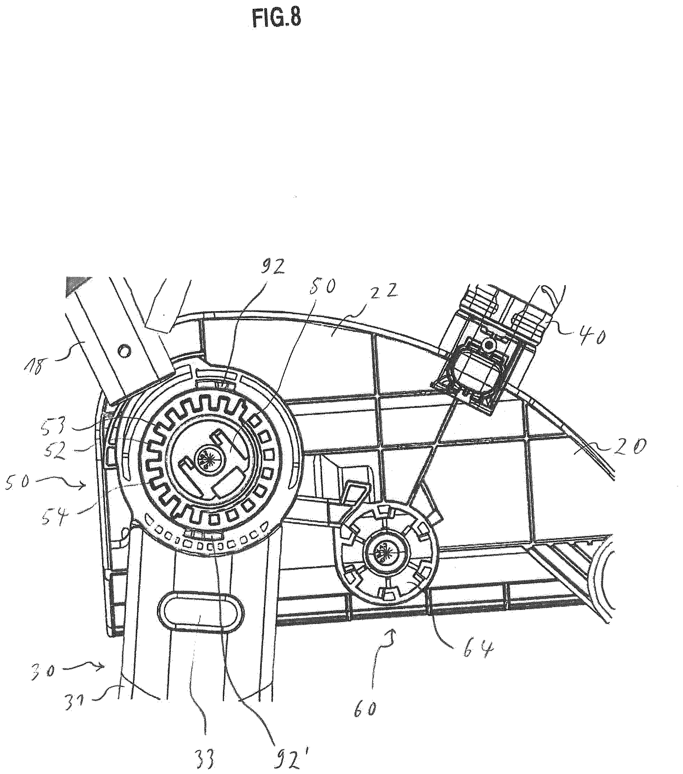

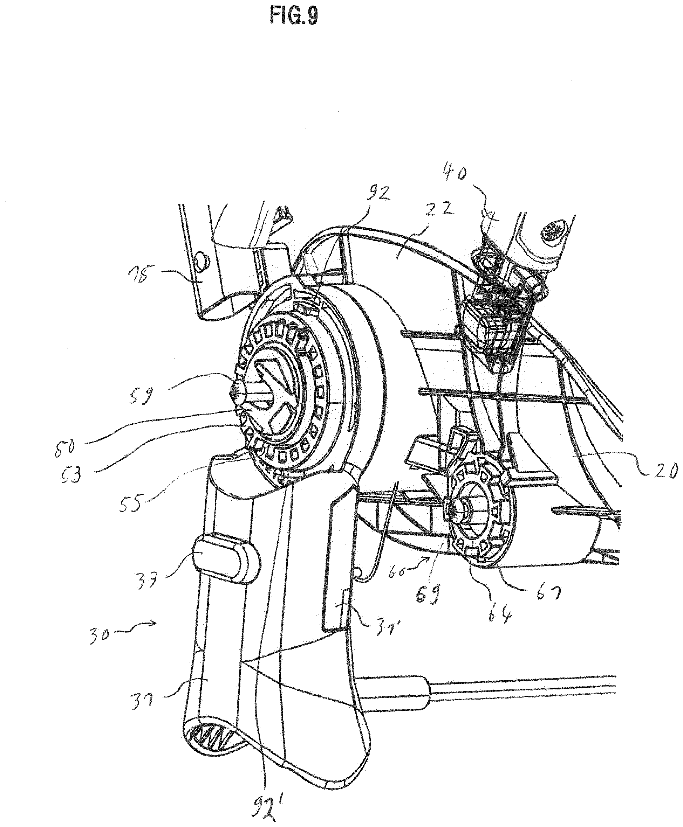

Hierdurch drückt das dreieckig-förmig ausgebildete Zugelement 56 gegen den Vorsprung 81 (siehe Fig. 8 und Fig. 9) auf der einen Seite und gegen das Rückenlehneverbindungselement 18 auf der anderen der ersten Seite entgegengesetzten Seite. Da das Rückenlehneverbindungselement 18 bzw. die Rückenlehne 10 sich nicht nach außen (in Fig. 2 aus der Papierebene heraus) bewegen kann, da das Rückenlehneverbindungselement 18 über die erste Drehachse 59 fest (in Axialrichtung der ersten Drehachse 59) mit dem Sitzflächenelement 20 verbunden ist, wird das dritte Zahnrad 52 nach innen, d. h. in Richtung des Sitzflächenelements 20 (in Fig. 6 in die Papierebene hinein) gedrückt.

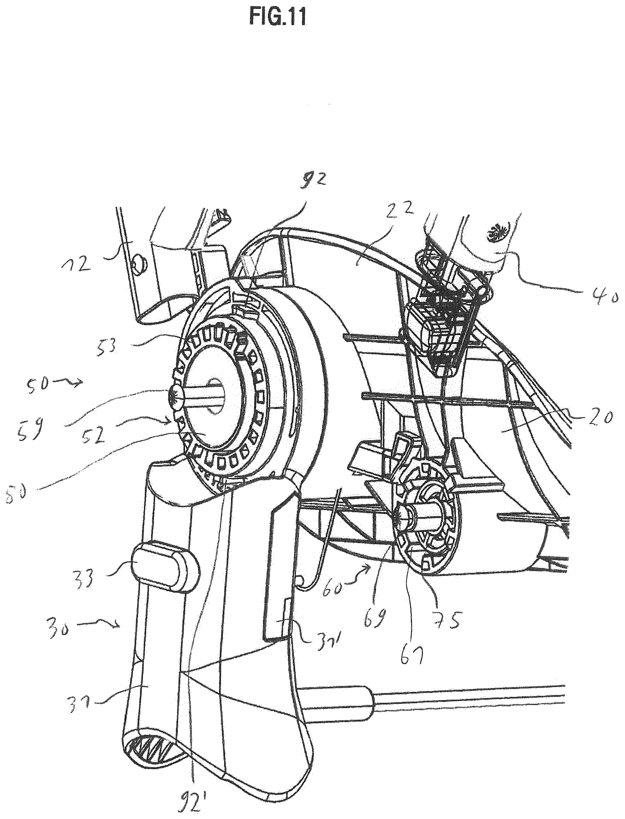

In der Verriegelungsstellung/Arretierungsstellung, die in den Fig. 6-11 gezeigt ist, allerdings ohne das für die dritte Arretierung natürlich notwendige Rückenlehneverbindungselement 18, befindet sich das dritte Zahnrad 52 in einer solchen Position, dass seine Zahnradzähne 53 teilweise in Eingriff mit der vierten Innenverzahnung 130 in Eingriff sind und teilweise in Eingriff mit der dritten Innenverzahnung 54 in Eingriff sind. Insbesondere befindet sich ungefähr die Hälfte jedes Zahnradzahns 53 in Eingriff mit der einen Innenverzahnung 130 und die andere Hälfte mit der anderen Innenverzahnung 54.

Durch Betätigen des Freigabegriffs 15 wird das Zugelement 56 bewegt, welches wiederum auf das dritte Zahnrad 52 derart einwirkt, dass dieses nach innen (in Richtung des Sitzflächenelements 20 entlang der ersten Drehachse 59) gedrückt und bewegt wird. Hierdurch bewegen sich die Zahnradzähne 53 des dritten Zahnrads 52 aus der Innenverzahnung 61 heraus und das dritte Zahnrad 52 gelangt vollständig in die dritte Innenverzahnung 54. Dies bedeutet, dass kein Teil des dritten Zahnrades 52, insbesondere nicht die Zahnradzähne 53 nach außen (d. h. von dem Sitzflächenelement 20 weg, aus der Papierebene in Fig. 5), heraussteht. Somit ist nun die Rückenlehne 10 in Bezug auf das Adapterelement 30 um die erste Drehachse 59 drehbar.

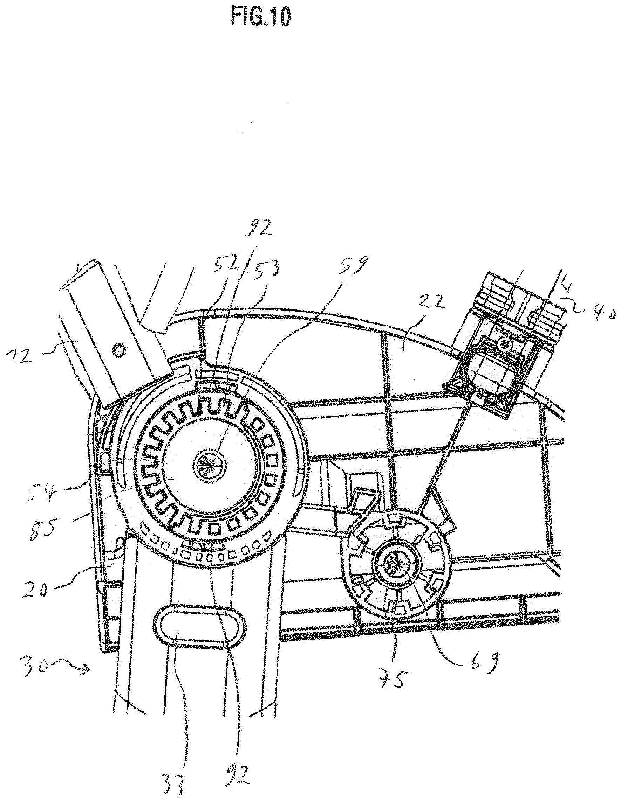

Auf der in Fig. 10 nicht dargestellten Rückseite des dritten Zahnrads 52 ist eine weitere Feder angeordnet, die dafür sorgt, dass das dritte Zahnrad 52 mit einer Kraft beaufschlagt wird, die das dritte Zahnrad 52 nach außen (in Fig. 6, in Fig. 8 und in Fig. 10 aus der Papierebene heraus) drückt. Nach dem Loslassen des Freigabegriffs 15 drückt die dritte Druckfeder 58 das Zugelement 56 wieder in die in Fig. 6 dargestellte Position. Hierdurch wird kein Druck bzw. keine Kraft mehr auf das dritte Zahnrad 52 nach innen bewirkt, so dass durch die (in Fig. 6 nicht dargestellte) Feder auf der Rückseite des dritten Zahnrads 52 das dritte Zahnrad 52 wieder herausgedrückt wird, so dass es teilweise wieder in Eingriff mit der zweiten Innenverzahnung 61 gelangt. Nach dem Loslassen des Freigabegriffs 15 gelangt das dritte Zahnrad 52 somit wieder in eine Verriegelungsstellung, so dass die Rückenlehne 10 in Bezug auf das Arretierungselement 30 verriegelt ist (dritte Arretierung).

In Fig. 6 sind zwei Schubringvorsprünge 92, 92' des Schubrings 90 zu sehen. Die beiden Schubringvorsprünge 92, 92' liegen in Bezug auf die erste Drehachse 59 einander gegenüber. Die beiden Schubringvorsprünge 92, 92' befinden sich teilweise in Aussparungen der äußeren Adapterelementhälfte 31 und greifen durch die Aussparungen hindurch, wobei die Aussparungen an den Außenumfang des dritten Zahnrads 52 unmittelbar anschließen.

In Fig. 8 ist eine weitere "Schicht" im Verhältnis zu der Ansicht von Fig. 4 entfernt. D. h., die dritte Druckfeder 58 sowie das Zugelement 56 sind entfernt. Im mittleren Bereich des dritten Zahnrads 52 ist ein Schrägelement 80 mit einem Vorsprung 81 ausgebildet. Dieser Vorsprung 80 zusammen mit dem Zugelement 56 führt dazu, dass das dritte Zahnrad 52 bei Betätigung des Zuggriffs 15 nach innen gedrückt wird. Fig. 9 zeigt eine perspektivische Ansicht des Ausschnitts aus Fig. 8.

In Fig. 10 ist das Schrägelement 80 entfernt und somit eine weitere "Schicht" des ersten Arretierungselements 50 freigelegt. Im Innenbereich (der Bereich, der zwischen Zahnradzähnen 53 und der ersten Drehachse 59 liegt) befindet sich eine Gleitfläche 85, die scheibenförmig ausgebildet ist. Das Schrägelement 80 kann über diese Gleitfläche 85 gleiten, und somit kann sich das dritte Zahnrad 52 relativ zum Schrägelement 80 bzw. das Schrägelement relativ zum dritten Zahnrad 52 um die erste Drehachse 59 drehen.

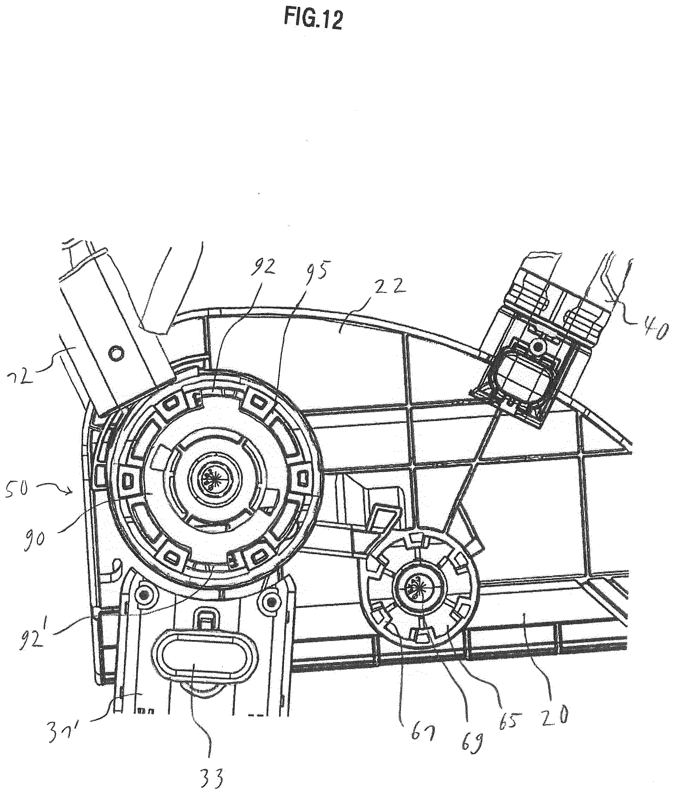

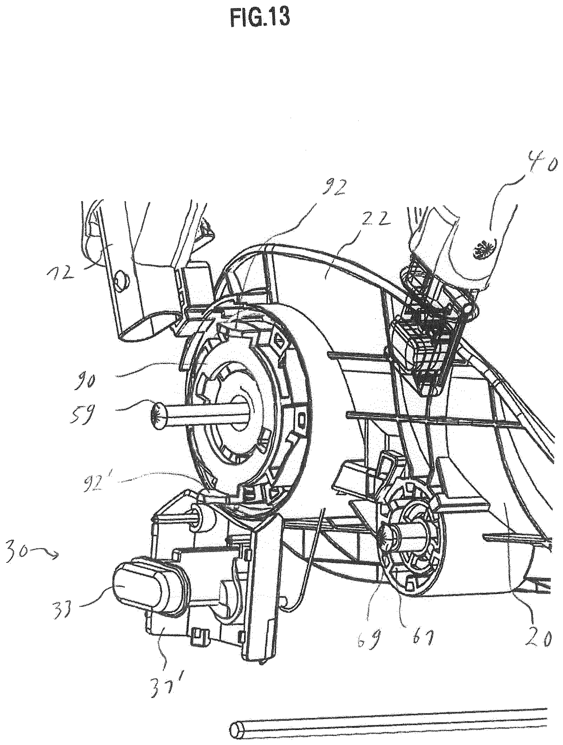

Fig. 12 zeigt eine weitere Aufsicht auf den in den Fig. 2, 4, 6, 8 und 10 gezeigten Ausschnitt, wobei ein Teil des ersten Adapterelements 30, nämlich die äußere Adapterelementhälfte 31, und das dritte Zahnrad 52 entfernt wurden. Fig. 13 zeigt eine perspektivische Ansicht des Ausschnitts aus Fig. 12.

Deutlich zu erkennen in Fig. 12 und Fig. 13 ist ein im Wesentlichen scheibenförmig ausgebildeter Schubring 90, der nicht-drehbar gegenüber der äußeren Adapterelementhälfte 31 um die erste Drehachse 59 angeordnet bzw. gelagert ist. Der Schubring 90 ist starr bzw. fest, d.h. nicht drehbar, gegenüber dem ersten Zahnrad 95.

An zwei in Bezug auf die erste Drehachse 59 gegenüberliegenden Seiten des Schubrings 90 sind zwei (aus der Papierebene in Fig. 12) vom Sitzflächenelement 20 wegstehende Schubringvorsprünge 92, 92' ausgebildet. Diese stehen durch Öffnungen/Aussparungen des Adapterelements 30 bzw. der äußeren (und in Fig. 12 bereits entfernten) Adapterelementhälfte 31 hindurch.

Bei einer Drehung der Rückenlehne 10 um die erste Drehachse 59 in Bezug auf das Sitzflächenelement 20 gelangen diese beiden Schubringvorsprünge 92, 92' in Kontakt mit zwei gegenüberliegenden Vorsprüngen 63, 63' des Rückenlehneverbindungselements 18 (siehe Fig. 18 und Fig. 19). Die Vorsprünge 63, 63' steigen in Umfangsrichtung des unteren kreisförmigen Endes des Rückenlehneverbindungselements 18 langsam an. Beim Verringern des Winkels zwischen der Rückenlehne 10 und dem Sitzflächenelement 20 gelangen die Vorsprünge 63, 63' mit den beiden Schubringvorsprünge 92, 92' in Kontakt. Die Schubringvorsprünge 92, 92' gleiten bzw. gelangen auf die Vorsprünge 63, 63', die in Umfangsrichtung des unteren kreisförmigen Endes des Rückenlehneverbindungselements 18 immer weiter hervorstehen. Die Vorsprünge 63, 63' drücken beim Verringern des Winkels zwischen Rückenlehne 10 und Sitzflächenelement 20 immer stärker gegen die Schubringvorsprünge 92, 92' bzw. die Schubringvorsprünge 92, 92' drücken hierbei immer stärker gegen die Vorsprünge 63, 63'.

Somit wird durch Drehen der Rückenlehne 10 um die erste Drehachse 59 und somit Drehen der Vorsprünge 63, 63' um die erste Drehachse 59 ein Druck über die Schubringvorsprünge 92, 92' auf den Schubring 90 bewirkt, der den Schubring 90 nach innen, d. h. in Richtung des Sitzflächenelements 20 drückt (in Fig. 12 in die Papierebene hinein).

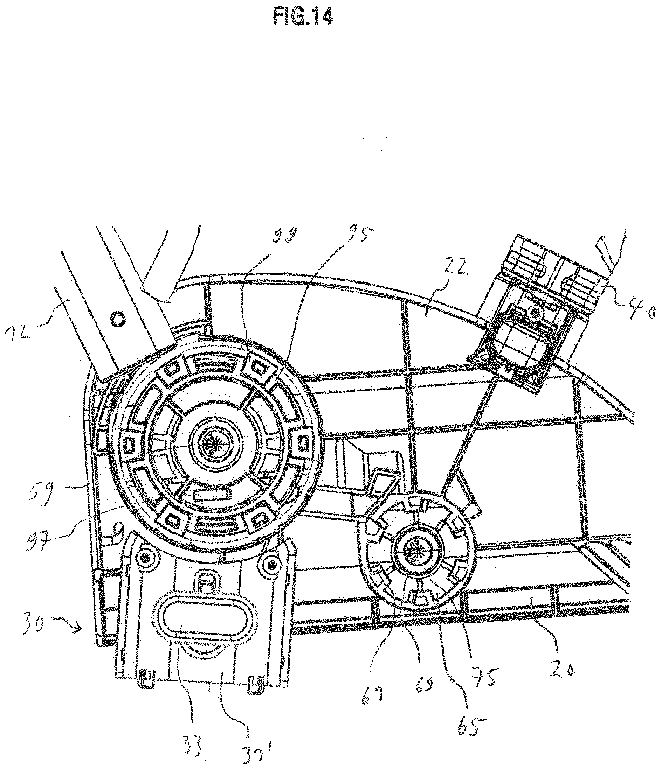

Der Schubring 90 sitzt auf dem ersten Zahnrad 95 auf. In Fig. 14 ist der Schubring 90 entfernt, so dass das erste Zahnrad 95 deutlich zu erkennen ist. Das erste Zahnrad 95 befindet sich mit seinen Zähnen teilweise in Eingriff mit dem Adapterelement 30. Durch den Druck des Schubrings 90 nach innen wird das erste Zahnrad 95 gegen eine (nicht dargestellte Feder) nach innen, d. h, in Richtung des Sitzflächenelements 20 (in Fig. 12 und in Fig. 14 in die Zeichenebene hinein) gedrückt. Somit gelangt das erste Zahnrad 95 außer Eingriff mit der ersten Innenverzahnung 99 des Adapterelements 30 bzw. der äußeren Adapterelementhälfte 31. Das Adapterelement bzw. die äußere Adapterelementhälfte 31 weist somit auf seinen beiden Seiten, d. h. auf der der ersten Abdeckung 51 zugewandten Seite als auch auf der dem Sitzflächenelement 20 zugewandten Seite, jeweils eine Innenverzahnung 99, 54 auf.

Nachdem das erste Zahnrad 95 außer Eingriff mit dem Adapterelement 30 bzw. mit der äußeren Adapterelementhälfte 31 gelangt ist, kann das Sitzflächenelement 20 um die erste Drehachse 59 gedreht werden. Somit ist das Sitzflächenelement 20 in eine Freigabestellung gelangt. In dieser Freigabestellung ist der Winkel zwischen dem Sitzflächenelement 20 und dem Adapterelement 30 oder den Adapterelementen 30, 30' verringerbar. Hierdurch lässt sich das Sitzflächenelement 20 einklappen und nach unten bewegen.

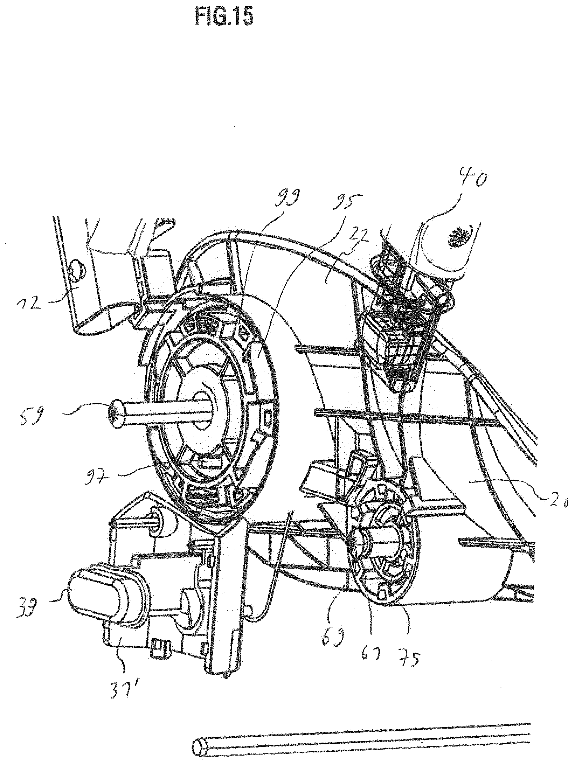

Fig. 14 zeigt eine weitere Aufsicht auf den in den Fig. 2, 4, 6, 8, 10 und 12 gezeigten Ausschnitt, wobei der Schubring 90 entfernt wurde. Fig. 15 zeigt eine perspektivische Ansicht des Ausschnitts in Fig. 14.

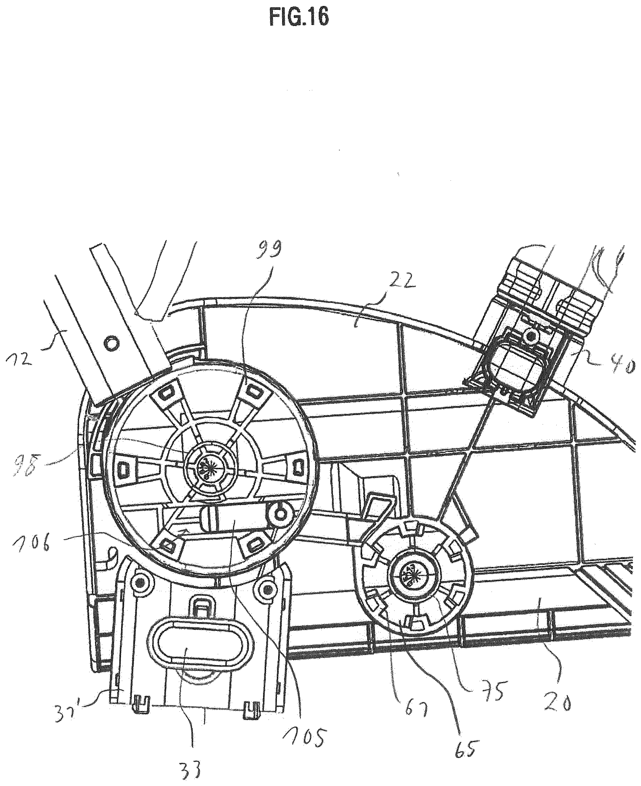

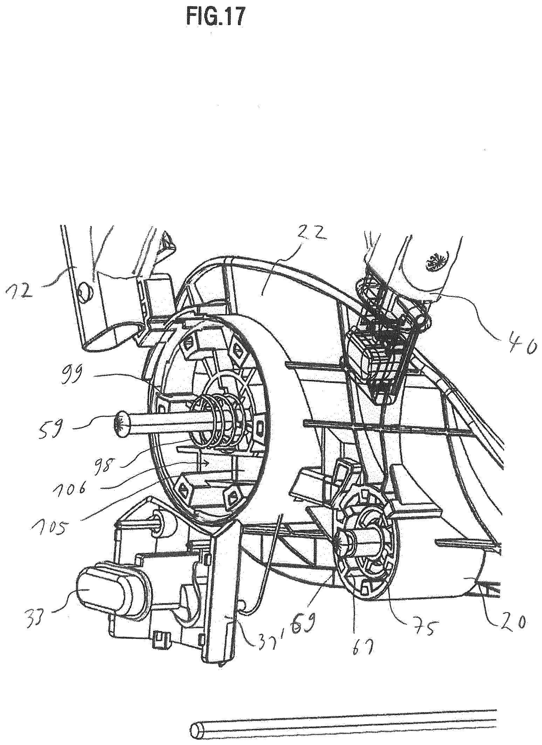

Fig. 16 zeigt eine weitere Aufsicht auf den in den Fig. 2, 4, 6, 8, 10, 12 und 14 gezeigten Ausschnitt, wobei das erste Zahnrad 95 entfernt wurde. Fig. 17 zeigt eine perspektivische Ansicht des Ausschnitts in Fig. 16.

In Fig. 16 ist das erste Zahnrad 95 entfernt. In Fig. 17 ist die erste Druckfeder 98 zu sehen, die gegen das erste Zahnrad 95 drückt und dieses nach außen (in Fig. 16 aus der Zeichenebene heraus, d.h. von dem Sitzflächenelement 20 weg) drückt.

Das erste Zahnrad 95 weist einen schrägen Vorsprung 97 auf. Der schräge Vorsprung 97 zeigt in Fig. 14 in Richtung des Sitzflächenelements 20, d.h. er befindet sich in Fig. 14 auf der Rückseite des ersten Zahnrads 95. Durch Drehen der Rückenlehne 10 im Uhrzeigersinn in Fig. 2 bzw. Fig. 14 wird über den schrägen Vorsprung 97 das zweite Zugelement 106 (in Fig. 14 nach links) bewegt. Das zweite Zugelement 105 bewegt einen Seilzug bzw. Bowdenzug, der das Zugelement 106 mit der zweiten Arretierungselement 60 verbindet. Durch Ziehen des Seilzugs bzw. Bowdenzugs (nicht gezeigt) wird das zweite Zahnrad 64 nach Innen (in Richtung des Sitzflächenelements 20) bewegt wird und somit die zweite Arretierung (zwischen Rückhalteelement 40 und Sitzflächenelement 20) gelöst.

Das erste Arretierungselement 50 umfasst das zweite Zugelement 105, das in einer Zugelementaussparung 106 beweglich ist. Die Zugelementaussparung 106 verläuft in Fig. 16 in einem Winkel von ca. 5°-10° zur Horizontalen geneigt nach rechts oben. Über das zweite Zugelement 105 wird ein weiterer, zweiter Seilzug (nicht gezeigt) betätigt, der das zweite Arretierungselement 60 von einer Arretierungsstellung in eine Freigabestellung bewegt (dies entspricht der zweiten Arretierung).

Beim Drehen der Rückenlehne 10 (in Fig. 2 im Uhrzeigersinn) gelangen die Schubringvorsprünge 92, 92' in Kontakt mit den Vorsprüngen 63, 63' der äußeren Adapterelementhälfte 31 (siehe Fig. 18 und Fig. 19). Die Schubringvorsprünge 92, 92' drücken gegen die (in Umfangsrichtung langsam ansteigenden) Vorsprünge 63, 63'. Hierdurch wird der Schubring 90 nach Innen (in Fig. 16 in die Papierebene hinein) gedrückt. Dieser drückt und bewegt wiederum das erste Zahnrad 92 nach Innen (in Richtung des Sitzflächenelements 20) gegen die erste Druckfeder 98 gedrückt. Gleichzeitig drückt der schräge Vorsprung 97 des ersten Zahnrads 92 gegen das zweite Zugelement 105 und bewegt dieses vom zweiten Arretierungselement 60 weg (in Fig. 16 nach links). Über den zweiten Seilzug bzw. Bowdenzug, der mit dem zweiten Zugelement 105 verbunden ist, wird das zweite Arretierungselement, insbesondere das zweite Zahnrad 64, betätigt und außer Eingriff mit (der Innenverzahnung) der Rückhalteelementstrebe 42 gebracht.

Das zweite Arretierungselement 60 umfasst ein zweites Zahnrad 64, das mit Nuten 65 des Sitzflächenelements in Eingriff steht. Bei Betätigung des zweiten Seilzugs (d.h. durch nach Innendrücken des ersten Zahnrads 52 und der dadurch bewirkten Bewegung des zweiten Zugelements 105 weg von dem zweiten Arretierungselement 60) wird das zweite Zahnrad 64 derart gegen eine zweite Druckfeder 75 gedrückt, dass das zweite Zahnrad 64 in Richtung des Sitzflächenelements 20 entlang der zweiten Drehachse 69 gedrückt und bewegt wird. Hierdurch gelangt das zweite Zahnrad 64 außer Eingriff mit der Innenverzahnung der Rückhalteelementstrebe 42, 42', indem das zweite Zahnrad 64 vollständig in die zweite Innenverzahnung 61 des Sitzflächenelements 20 hineinbewegt wird. Nachdem das zweite Zahnrad 64 derart außer Eingriff mit der Rückhalteelementstrebe 42 bzw. dem Rückhalteelement 40 gelangt ist, ist das Rückhalteelement 40 um die zweite Drehachse 69 (gegenüber dem Sitzflächenelement 20) drehbar.

In der Verriegelungsstellung des Rückhalteelements 20 (zweite Arretierung) befindet sich das zweite Zahnrad 64 teilweise in Eingriff mit der zweiten Innenverzahnung 61 des Sitzflächenelements 20 und teilweise in Eingriff mit der Innenverzahnung des Rückhalteelements 20 bzw. der Rückhalteelementstrebe 42. Insbesondere befindet sich ungefähr die Hälfte des zweiten Zahnrads 64 in Eingriff mit der einen Innenverzahnung 61 des Sitzflächenelements 20 und die andere Hälfte mit der anderen Innenverzahnung des Rückhalteelements 20 bzw. der Rückhalteelementstrebe 42.

Beim Drehen der Rückenlehne 10 um die erste Drehachse 59 und Verringern des Winkels zwischen der Rückenlehne 10 und dem Sitzflächenelement 20 (Bewegen der Rückenlehne 10 auf das Sitzflächenelement 20 zu, in Fig. 2 in Uhrzeigerrichtung) wird zunächst die Arretierung/Verriegelung des Rückhaltelements 40 aufgehoben bzw. entriegelt (zweite Arretierung). Durch weiteres Verringern des Winkels zwischen der Rückenlehne 10 und dem Adapterelement 30 (in den Figuren 2 bis 19 im Uhrzeigersinn) bzw. in Bezug auf das Rückhalteelement 30 wird anschließend auch die Verriegelung des Sitzflächenelements 20 in Bezug auf das Adapterelement 30 aufgehoben (erste Arretierung).

Somit lässt sich nach Betätigen der Freigabevorrichtung bzw. des Freigabegriffs 15 und des Bewegens der Rückenlehne 10 im Uhrzeigersinn das Rückhalteelement 40 und das Sitzflächenelement 20 lösen und einklappen und somit der Winkel zwischen diesen und dem Adapterelement 30 verringern. Hierdurch sinken die äußeren Abmessungen des zusammengeklappten Kindersitzes 1. Dieser lässt sich dadurch einfach und platzsparend verstauen.

Das Rückhalteelement 30 hat eine Einrastposition, in der das Rückhalteelement 30 beim Auseinanderklappen des Kindersitzes 1 einrastet. Diese Einrastposition/Arretierungsposition ist in Fig. 1 gezeigt.

Das Sitzflächenelement 20 hat eine Einrastposition, in der das Sitzflächenelement 20 einrastet. Diese Einrastposition/Arretierungsposition ist in Fig. 1 und den Fig. 2-19 gezeigt.

In der in Fig. 1 gezeigten Ausrichtung sind alle drei Arretierungen (erste Arretierung, zweite Arretierung, dritte Arretierung) festgesetzt, d.h. dass die Rückenlehne 10, das Sitzflächenelement 20, das Rückhalteelement 40 und das Adapterelement bzw. die Adapterelemente 30, 30' gegeneinander nicht beweglich sind. Dies bedeutet, dass der Winkel zwischen den genannten Elementen und somit auch der Abstand der zum ersten Arretierungselement 50 distalen Enden der Elemente zueinander nicht veränderbar sind.

Bei allen drei Arretierungen befindet sich jeweils ein Zahnrad 95, 64, 52 in Eingriff mit jeweils zwei Innenverzahnungen (jeweils einer äußeren Innenverzahnung und einer inneren Innenverzahnung). Zum Lösen der jeweiligen Arretierung wird das jeweilige Zahnrad 95, 64, 52 nach Innen (in den Fig. 2, 4, 6, 8, 10, 12, 14 und 16 in die Papierebene hinein, d.h. auf das Sitzflächenelement 20 zu) gegen eine Druckfeder bewegt, so dass das jeweilige Zahnrad in der jeweils inneren Verzahnung (d.h. der Verzahnung, die näher zum Sitzflächenelement 20 angeordnet ist) aufgenommen wird. Hierdurch ist jeweils die äußere Verzahnung gegenüber dem jeweiligen Zahnrad 95, 64, 52 und somit gegenüber der jeweils inneren Verzahnung um die erste Drehachse 59 bzw. zweite Drehachse 69 drehbar.

### Bezugszeichenliste

- 1: Kindersitz
- 10: Rückenlehne
- 12, 12': Außenstreben
- 13: Freiraum
- 14: Längsabschnitt
- 15: Freigabegriff
- 16: Lendenunterstützungsbereich
- 18, 18': Rückenlehneverbindungselement
- 19: obere Ende der Rückenlehne
- 20: Sitzflächenelement
- 22, 22': seitliche Enden
- 24: Bodenbereich
- 30, 30': Adapterelement
- 31, 31': Adapterelementhälften
- 33: Entriegelungsknopf
- 40: Rückhalteelement
- 42, 42': Rückhalteelementstrebe
- 50: erstes Arretierungselement
- 51: erste Abdeckung
- 52: drittes Zahnrad
- 53: Zahnradzähnen des dritten Zahnrads
- 54: dritte Innenverzahnung
- 55: Nuten
- 56: erstes Zugelement
- 57: Aussparung
- 58: dritte Druckfeder
- 59: erste Drehachse
- 60: zweites Arretierungselement
- 61: zweite Innenverzahnung
- 63, 63': Vorsprünge des Rückenlehnenelements
- 64: zweites Zahnrad
- 65: Nuten
- 69: zweite Drehachse
- 75: zweite Druckfeder
- 80: Schrägelement
- 81: Vorsprung
- 85: Gleitfläche
- 90: Schubring
- 92, 92': Schubringvorsprung
- 95: erstes Zahnrad
- 97: schräger Vorsprung
- 98: erste Druckfeder
- 99: erste Innenverzahnung
- 105: zweites Zugelement
- 106: Zugelementaussparung
- 110: Mittelpunkt des ersten Arretierungselements
- 120: Mittelpunkt des zweiten Arretierungselements
- 130: vierte Innenverzahnung

## Patentansprüche

1. Kinderwagen, insbesondere Kindersportwagen, Buggy oder dergleichen Fahrzeug für Kinder, umfassend
ein Kinderwagengestell und einen zusammenklappbaren Kindersitz (1), der umfasst
- eine Rückenlehne (10),
- ein Sitzflächenelement (20),
- ein Adapterelement oder mehrere Adapterelemente (30, 30'), über das oder die der Kindersitz (1) mit dem Kinderwagengestell verbindbar ist,
wobei der Kinderwagen aufweist:
- ein erstes Arretierungselement (50), über das das Sitzflächenelement (20) in Bezug auf das Adapterelement oder die Adapterelemente (30, 30') arretierbar ist,
wobei das erste Arretierungselement (50) derart ausgebildet ist, dass durch Verringern des Winkels zwischen der Rückenlehne (10) und dem Sitzflächenelement (20) die Arretierung des Sitzflächenelements (20) in Bezug auf das Adapterelement oder die Adapterelemente (30, 30') lösbar ist,
**gekennzeichnet durch**:
- ein zweites Arretierungselement (60), über das ein Rückhalteelement (40) zum Zurückhalten eines Kinds im Kindersitz (1) in Bezug auf das Sitzflächenelement (20) arretierbar ist, wobei das zweite Arretierungselement (60) derart ausgebildet ist, dass durch Verringern des Winkels zwischen der Rückenlehne (10) und dem Sitzflächenelement (20) die Arretierung des Rückhalteelements (40) in Bezug auf das Sitzflächenelement (20) lösbar ist.

2. Kinderwagen nach Anspruch 1,
wobei die Rückenlehne (10) und das Sitzflächenelement (20) um eine erste Drehachse (59) drehbar sind.

3. Kinderwagen nach einem der vorhergehenden Ansprüche,
wobei das Rückhalteelement (40) um eine zweite Drehachse (69) drehbar ist.

4. Kinderwagen nach einem der vorhergehenden Ansprüche,
wobei die Rückenlehne (10) und das Sitzflächenelement (20) um eine erste Drehachse (59) und das Rückhalteelement (40) um eine zweite Drehachse (69) drehbar sind,
und wobei die erste Drehachse (59) nichtidentisch mit der zweiten Drehachse (69) ist.

5. Kinderwagen nach einem der vorhergehenden Ansprüche,
wobei die Rückenlehne (10) eine Freigabevorrichtung, insbesondere einen Freigabegriff (15), umfasst, wobei die Freigabevorrichtung vorzugsweise an einem dem ersten Arretierungselement (50) abgewandten Ende der Rückenlehne (10) angeordnet ist,
und
das erste Arretierungselement (50) zum Arretieren der Rückenlehne (10) in Bezug auf das Adapterelement oder die Adapterelemente (30, 30') in einer oder mehreren Positionen ausgebildet ist,
wobei der Kindersitz (1) derart ausgebildet ist, dass durch Betätigung der Freigabevorrichtung, insbesondere durch Wegziehen der Freigabevorrichtung vom ersten Arretierungselement (50), die Arretierung zwischen der Rückenlehne (10) und dem Adapterelement oder den Adapterelementen (30, 30') lösbar ist, so dass der Winkel zwischen der Rückenlehne (10) und dem Adapterelement oder den Adapterelementen (30, 30') veränderbar, insbesondere verringerbar, ist.

6. Kinderwagen nach Anspruch 2 oder 4,
wobei das erste Arretierungselement (50) ein erstes Zahnrad (95) zum Arretieren des Sitzflächenelements (20) in Bezug auf das Adapterelement oder die Adapterelemente (30, 30') umfasst, wobei das erste Zahnrad (95) in der Freigabestellung des Sitzflächenelements (20) um die erste Drehachse (59) drehbar ist.

7. Kinderwagen nach Anspruch 6,
wobei das erste Zahnrad (95) entlang der ersten Drehachse (59) derart verschiebbar angeordnet ist, dass das erste Zahnrad (95) außer Eingriff mit dem Adapterelement (30, 30) und/oder dem Sitzflächenelement (20) bringbar ist und somit die Arretierung des Sitzflächenelements (20) in Bezug auf die Adapterelemente (30, 30') lösbar ist.

8. Kinderwagen nach einem der vorhergehenden Ansprüche wenn abhängig von Anspruch 3 oder 4,
wobei das zweite Arretierungselement ein zweites Zahnrad (64) zum Arretieren des Rückhalteelements (40) in Bezug auf das Sitzflächenelement (20) umfasst, wobei das zweite Zahnrad (64) in der Freigabestellung des Rückhalteelements (40) um die zweite Drehachse (69) drehbar ist.

9. Kinderwagen nach Anspruch 8,
wobei das zweite Zahnrad (64) entlang der zweiten Drehachse (69) derart verschiebbar angeordnet ist, dass das zweite Zahnrad (64) außer Eingriff mit dem Rückhalteelement (40) und/oder dem Sitzflächenelement (20) bringbar ist und somit die Arretierung des Rückhalteelements (40) in Bezug auf das Sitzflächenelement (20) lösbar ist.

10. Kinderwagen nach einem der vorhergehenden Ansprüche,
wobei das erste Arretierungselement (50) ein drittes Zahnrad (52) zur Arretierung der Rückenlehne (10) in Bezug auf das Adapterelement oder die Adapterelemente (30, 30') umfasst.

11. Kinderwagen nach Anspruch 5 und 10,
wobei der Kindersitz (1) derart ausgebildet ist, dass durch Betätigung der Freigabevorrichtung das dritte Zahnrad (52) zur Lösung einer Arretierung zwischen der Rückenlehne (10) und dem Adapterelement oder den Adapterelementen (30, 30') außer Eingriff bringbar ist.

12. Kinderwagen nach einem der vorhergehenden Ansprüche,
wobei das erste Arretierungselement (50) mit dem zweiten Arretierungselement (60) über einen Seilzug, insbesondere einen Bowdenzug, verbunden ist.

## Claims

1. Baby carriage, in particular a stroller, buggy or similar vehicle for children, comprising a baby carriage frame and a collapsible child seat (1) that comprises
- a backrest (10),
- a seat surface element (20),
- one adapter element or multiple adapter elements (30, 30') via which the child seat (1) can be connected to the baby carriage frame, wherein the baby carriage comprises:
- a first locking element (50), by means of which the seat surface element (20) can be locked in relation to the adapter element or adapter elements (30, 30'),
wherein the first locking element (50) is designed in such a way that by reducing the angle between the backrest (10) and the seat surface element (20), the locking of the seat surface element (20) with respect to the adapter element or adapter elements (30, 30') can be released,
- **characterized by**:
- a second locking element (60), by means of which a restraining element (40) for restraining a child in the child seat (1) can be locked in relation to the seat surface element (20), wherein the second locking element (60) is designed in such a way that the locking of the restraining element (40) with respect to the seat surface element (20) can be released by reducing the angle between the backrest (10) and the seat surface element (20).

2. Baby carriage according to claim 1,
wherein the backrest (10) and the seat surface element (20) are rotatable about a first axis of rotation (59).

3. Baby carriage according to one of the preceding claims,
wherein the restraining element (40) is rotatable about a second axis of rotation (69).

4. Baby carriage according to one of the preceding claims,
wherein the backrest (10) and the seat surface element (20) are rotatable about a first axis of rotation (59) and the restraining element (40) is rotatable about a second axis of rotation (69), and wherein the first axis of rotation (59) is not identical to the second axis of rotation (69).

5. Baby carriage according to one of the preceding claims,
wherein the backrest (10) comprises a release device, in particular a release handle (15), wherein the release device is preferably arranged at an end of the backrest (10) facing away from the first locking element (50),
and
the first locking element (50) is designed to lock the backrest (10) in relation to the adapter element or adapter elements (30, 30') in one or more positions,
wherein the child seat (1) is designed in such a way that by operating the release device, in particular by pulling the release device away from the first locking element (50), the locking between the backrest (10) and the adapter element or adapter elements (30, 30') can be released, so that the angle between the backrest (10) and the adapter element or adapter elements (30, 30') can be changed, in particular reduced.

6. Baby carriage according to claim 2 or 4,
wherein the first locking element (50) comprises a first gearwheel (95) for locking the seat surface element (20) with respect to the adapter element or the adapter elements (30, 30'), wherein the first gearwheel (95) is rotatable about the first axis of rotation (59) in the release position of the seat surface element (20).

7. Baby carriage according to claim 6,
wherein the first gearwheel (95) is arranged to be displaceable along the first axis of rotation (59) in such a way that the first gearwheel (95) can be disengaged from the adapter element (30, 30) and/or the seat surface element (20) and thus the locking of the seat surface element (20) with respect to the adapter elements (30, 30') can be released.

8. Baby carriage according to one of the preceding claims if dependent on claim 3 or 4,
wherein the second locking element comprises a second gearwheel (64) for locking the restraining element (40) with respect to the seat surface element (20), wherein the second gearwheel (64) is rotatable about the second axis of rotation (69) in the release position of the restraining element (40).

9. Baby carriage according to claim 8,
wherein the second gearwheel (64) is arranged to be displaceable along the second axis of rotation (69) in such a way that the second gearwheel (64) can be disengaged from the restraining element (40) and/or the seat surface element (20) and thus the locking of the restraining element (40) with respect to the seat surface element (20) can be released.

10. Baby carriage according to one of the preceding claims,
wherein the first locking element (50) comprises a third gearwheel (52) for locking the backrest (10) with respect to the adapter element or the adapter elements (30, 30').

11. Baby carriage according to claim 5 and 10,
wherein the child seat (1) is designed such that the third gearwheel (52) can be disengaged by operating the release device to release a lock between the backrest (10) and the adapter element or adapter elements (30, 30').

12. Baby carriage according to one of the preceding claims,
wherein the first locking element (50) is connected to the second locking element (60) via a cable, in particular a Bowden cable.

## Revendications

1. Voiture d'enfant, en particulier poussette, buggy ou véhicule similaire pour enfant, comprenant un châssis de voiture d'enfant et un siège enfant (1) repliable qui comprend
- un dossier (10),
- un élément d'assise (20),
- un élément adaptateur ou plusieurs éléments adaptateurs (30, 30') à l'aide desquels le siège enfant (1) peut être relié au châssis de voiture d'enfant,
laquelle voiture d'enfant comporte :
- un premier élément de blocage (50) par lequel l'élément d'assise (20) peut être bloqué par rapport à l'élément adaptateur ou aux éléments adaptateurs (30, 30'),
le premier élément de blocage (50) étant conformé de telle manière que l'on puisse débloquer l'élément d'assise (20) par rapport à l'élément adaptateur ou aux éléments adaptateurs (30, 30') en réduisant l'angle entre le dossier (10) et l'élément d'assise (20),
**caractérisée en ce qu'**elle comprend :
- un deuxième élément de blocage (60) à l'aide duquel un élément de retenue (40) destiné à retenir un enfant dans le siège enfant (1) par rapport à l'élément d'assise (20) peut être bloqué, le deuxième élément de blocage (60) étant conformé de telle manière que l'on puisse débloquer l'élément de retenue (40) par rapport à l'élément d'assise (20) en réduisant l'angle entre le dossier (10) et l'élément d'assise (20).

2. Voiture d'enfant selon la revendication 1, dans laquelle le dossier (10) et l'élément d'assise (20) sont capables de rotation autour d'un premier axe de rotation (59).

3. Voiture d'enfant selon l'une des revendications précédentes, dans laquelle l'élément de retenue (40) est capable de rotation autour d'un deuxième axe de rotation (69).

4. Voiture d'enfant selon l'une des revendications précédentes, dans laquelle le dossier (10) et l'élément d'assise (20) sont capables de rotation autour d'un premier axe de rotation (59) et l'élément de retenue (40) autour d'un deuxième axe de rotation (69)
et dans laquelle le premier axe de rotation (59) n'est pas identique au deuxième axe de rotation (69).

5. Voiture d'enfant selon l'une des revendications précédentes, dans laquelle le dossier (10) comprend un dispositif de libération, en particulier une poignée de libération (15), le dispositif de libération étant de préférence disposé à une extrémité du dossier (10) opposée au premier élément de blocage (50)
et
le premier élément de blocage (50) est conçu pour bloquer le dossier (10) par rapport à l'élément adaptateur ou aux éléments adaptateurs (30, 30') dans une ou plusieurs positions,
le siège enfant (1) étant conçu de telle manière que l'actionnement du dispositif de libération, en particulier une traction écartant le dispositif de libération du premier élément de blocage (50), peut défaire le blocage entre le dossier (10) et l'élément adaptateur ou les éléments adaptateurs (30, 30'), de sorte que l'angle entre le dossier (10) et l'élément adaptateur ou les éléments adaptateurs (30, 30') peut être modifié, en particulier réduit.

6. Voiture d'enfant selon la revendication 2 ou 4, dans laquelle le premier élément de blocage (50) comprend une première roue dentée (95) pour bloquer l'élément d'assise (20) par rapport à l'élément adaptateur ou aux éléments adaptateurs (30, 30'), laquelle première roue dentée (95) est capable de rotation autour du premier axe de rotation (59) dans la position de libération de l'élément d'assise (20).

7. Voiture d'enfant selon la revendication 6, dans laquelle la première roue dentée (95) est disposée avec possibilité de translation le long du premier axe de rotation (59), de telle manière que la première roue dentée (95) peut être dégagée de sa prise avec l'élément adaptateur (30, 30) et/ou l'élément d'assise (20) et que le blocage de l'élément d'assise (20) par rapport aux éléments adaptateurs (30, 30') puisse être défait.

8. Voiture d'enfant selon l'une des revendications précédentes quand elles dépendent de la revendication 3 ou 4, dans laquelle le deuxième élément de blocage comprend une deuxième roue dentée (64) pour bloquer l'élément de retenue (40) par rapport à l'élément d'assise (20), la deuxième roue dentée (64) étant capable de rotation autour du deuxième axe de rotation (69) dans la position de libération de l'élément de retenue (40).

9. Voiture d'enfant selon la revendication 8, dans laquelle la deuxième roue dentée (64) est disposée avec possibilité de translation le long du deuxième axe de rotation (69), de telle manière que la deuxième roue dentée (64) puisse être dégagée de sa prise avec l'élément de retenue (40) et/ou l'élément d'assise (20) et que le blocage de l'élément de retenue (40) par rapport à l'élément d'assise (20) puisse ainsi être défait.

10. Voiture d'enfant selon l'une des revendications précédentes, dans laquelle le premier élément de blocage (50) comprend une troisième roue dentée (52) pour bloquer le dossier (10) par rapport à l'élément adaptateur ou aux éléments adaptateurs (30, 30').

11. Voiture d'enfant selon les revendications 5 et 10, dans laquelle le siège enfant (1) est conformé de telle manière que l'actionnement du dispositif de libération dégage la troisième roue dentée (52) de sa prise pour défaire un blocage entre le dossier (10) et l'élément adaptateur ou les éléments adaptateurs (30, 30').

12. Voiture d'enfant selon l'une des revendications précédentes, dans laquelle le premier élément de blocage (50) est relié au deuxième élément de blocage (60) par un câble de traction, en particulier un câble Bowden.
